# EUROPEAN PATENT SPECIFICATION

(11) **EP 0 770 754 B1**
(45) Date of publication and mention of the grant of the patent: **06.08.2003**
(21) Application number: 96117049.5
(22) Date of filing: 24.10.1996
(51) Int. Cl.: E06B 3/673, B29C 65/00, B65H 79/00

(54) **Flexible tape applicator and method of operation**
Aufbringvorrichtung für ein flexibles Band und sein Betriebsverfahren
Dispositif d'application d'un ruban souple et sa méthode de fonctionnement

(30) Priority: 24.10.1995 US 547589
(43) Date of publication of application: 02.05.1997
(73) Proprietor: TREMCO INCORPORATED, Beachwood, Ohio 44122 (US); Beston, Inc., Cleveland, Ohio 44128 (US)
(72) Inventor: Floyd, Frederick P., Gates Mills, Ohio 44040 (US); Gill, John P., North Olmstead, Ohio 44070 (US); Lalic, Iqor, Parma, Ohio 44134 (US); Lawson, Linda L., Elyria, Ohio 44035 (US)
(74) Representative: Selting, Günther, Dipl.-Ing.

(56) References cited:
- EP-A- 0 301 983
- EP-A- 0 403 408
- DE-A- 3 637 561
- DE-C- 4 335 673
- DE-U- 8 710 842
- FR-A- 2 599 465
- FR-A- 2 636 380

## Description

### BACKGROUND OF THE INVENTION

### Technical Field

The invention relates generally to a device for applying a flexible tape onto a planar sheet. More particularly, the invention relates to a device for laying a deformable, flexible adhesive tape onto a planar sheet under constant tension. Specifically, the present invention relates to a device for applying an insulating tape onto a planar glass sheet as part of the manufacturing process of multi-pane windows.

### Background Information

The need arises in a variety of manufacturing environments to apply a flexible tape onto a planar sheet. For example, adhesive tapes are often utilized to attach machine components to one another. Additionally, it is well known to apply insulating and vibration isolating tape to a variety of machines and building components to either entrap liquids and gases, or alternatively to seal out contaminants. Adhesive elastomeric flexible tapes are also often applied to access panels on machine housings such as air conditioning units and compressors when the machine housing will be subject to weather, or harsh manufacturing environments. Additionally, such flexible tapes are often applied between parallel panes of glass when manufacturing insulated windows and doors.

Specifically, a number of production steps are required in- the manufacture of glass units for placement within window and door frames. Thermally insulated, single and multi-pane window and door units include a number of structural elements: wood, aluminum or vinyl frames to encase the glass window; metal spacers which are spaced between the multi-pane glass panes and along the peripheral edge thereof, muntin and mullion strips placed between and contiguous to each glass sheet of the multi-pane window for providing an ornamental appearance, and sealant tape material applied to the perimeter edge of the glass sheets of the multi-pane unit.

Recent innovations in the manufacture of thermally insulative multi-pane windows include suspension of a polyester film coated with a heat insulative material between the panes of glass, and filling the space therebetween with a low conductivity gas, such as argon or krypton, to form a barrier to conductive heat transfer. The film placed between the glass sheets provides a barrier to radiative heat transfer through the window to the external environment.

It is well known in the manufacture of single or multi-pane window units that the manner of treatment and construction of the perimeter edges is critical to the performance of the window. The manner in which the perimeter edges of the glass sheets are made can have a performance degradating effect on the glass sheet when installed in an insulated door or window unit. The perimeter edge of the glass sheet can have a great impact on the overall thermal performance of the insulating window insofar as the center of the glass may register a higher value, yet the edges of the glass will be colder.

The thermal performance of the edge portion of the glass is particularly affected by the manner and method by which the tape material is applied to the perimeter edge of the glass panes. Sealant tape material for application on the perimeter edge of the glass may be manufactured of a variety of materials including polyisobutylene, or butyl hot melt, adhesive or a polymerizable plastic material injected by a nozzle placed adjacent the perimeter edge of the glass sheet. By way of example, one such sealant strip is manufactured by Tremco, Inc, and is sold under the trademark Swiggle® Seal. Swiggle® Seal has been found to be a convenient product in the manufacturing of double glazed windows. At room temperature, the product has considerable adhesive properties and is applied to the glass sheet to provide a hermetic barrier to the area where the frame fits around the perimeter edges of the glass sheet. Moisture seepage and conductive heat loss are thus prevented by the air-tight adhesion of the sealant strip to the glass sheets. Additionally, the sealant strip assures that the low conductivity argon or krypton gas remains trapped between the window panes.

In a multi-pane window, the sealant tape material is applied to the perimeter edge of one glass sheet to provide an air and water tight hermetic seal between the edges of the glass sheet on which it is laid, and a second sheet positioned on top of the sealant tape. Adhesive properties of the sealant tape material are designed to prevent fogging problems from developing due to a sealant tape leak, either between the sealant tape and the edge of either one or both of the glass sheets or between the sealant tape and the wood, aluminum or vinyl frame unit in which the multi-pane window is encased. When the hermetic adhesion of the sealant tape material fails, moisture in the air condenses in the space between the glass panes, and fogging occurs. Thus, the quality of the multi-pane window is marred by the fogging occurring between the glass sheets, and also, the heat insulative qualities of the multi-pane window are degraded by the sealant tape leak.

From the foregoing, it is obvious that the application of the sealant tape material is a critical problem in the overall manufacture and thermal performance of any glass unit, whether a single pane or multi-pane glass window.

The prior art discloses a number of devices for applying a sealant tape material to the perimeter edges of glass sheet material. Some examples of the prior art are U.S. Patent No. 3,886,013 to Bowser, U.S. Patent No. 3 990 570 to Mercier, U.S. Patent No. 4,088,522 to Mercier, U.S. Patent No. 4,145,237 to Mercier and U.S. Patent No. 4,546,723 to Leopold.

In the past, Swiggle® Seal has been applied by hand. Specifically, the strip is rolled off of a roll, aligned along the edge of the glass by hand and pressed down to adhere to the glass. Once the strip has been applied around the entire perimeter of the first pane of glass, the second pane is placed on top of the strip, and the entire unit is heated to bond the strip to the glass. While this method is presumably adequate for the purpose for which it is intended, it is disadvantageous because of inconsistencies in the placement of the strip relative to the edge of the pane, and because of the extensive time required to accurately place the insulated tape.

As a result of the difficulties in manually applying the insulating strip, various devices have been developed in an attempt to facilitate the application process. One such device is disclosed in U.S. Patent No. 4,756,789 to Kolff.

While this device is also presumably adequate for the purpose for which it was intended, it remains relatively time consuming, and contains the further problem that this device is designed to slide along the surface of the glass as the insulating strip is applied. Because many panes on which an insulating strip is applied are coated, for example by applying the polyester film coated with a heat insulated material between the panes of glass, a device which rubs along the surface of the glass has the potential of scratching or otherwise damaging these coatings.

The need thus exists for an applicator which will automatically apply flexible tape material to a planar sheet such as an insulating strip to a glass pane without contacting the glass pane. Additionally, the need exists for an applicator which will apply insulating flexible tapes to a glass pane along a predetermined path, and which assures that the strip remains accurately positioned adjacent the edge of the glass pane, and which will accurately form each corner thus providing a continuous strip about the perimeter of the glass pane.

EP-A-0 403 408 shows an applicator having a base which supports an applicator head and a table adapted to retain the sheet adjacent the base. First drive means are moving the applicator head and second drive means carried by the applicator head are driving the flexible tape. This applicator tries to maintain the tension of the flexible tape at a substantially constant level. This is achieved by a mechanical device comprising several arms linked via springs. This device can only even out little variations and is of a complicated construction.

DE-U-87 10 842 shows a device for applying spacers to a glass pane having an applicator head and a magazine for feeding the spacers to the applicator head. First drive means are moving the applicator head and second drive means carried by the applicator head are driving a supply spool for a flexible tape with the spacers. This device does not comprise any feedback or controlling means for correlating the tension and the speed of the tape with the spacers.

### SUMMARY OF THE INVENTION

Objectives of the invention include providing an automated applicator for applying flexible tape material to a planar sheet.

A further objective is to provide an applicator for applying a flexible insulating tape to the perimeter of a glass pane.

Another objective is to provide an applicator for bringing the edge portion of a flexible tape into contact with a planar sheet.

Yet a further objective is to provide an applicator which will accurately bend the flexible tape adjacent each corner of the planar sheet.

Still another objective is to provide an applicator for applying a flexible tape to a glass pane wherein the flexible tape is swiggle® seal.

Still a further objective is to provide an applicator which maintains a constant tension on the tape such that the tape is neither stretched nor compressed during application thereby assuring that the tape maintains a constant cross-sectional configuration.

A still further objective is to provide an applicator in which constant pressure is applied to the tape during application to the glass pane, and in which the tape is driven directly adjacent the point of contact to the glass pane.

Still another objective is to provide an applicator which moves through the Cartesian coordinate system. Yet another objective is to provide an applicator which moves the spool with the applicator head thereby minimizing the distance traveled by the flexible tape from the spool to the point of application to the planar sheet.

Still a further objective is to provide an applicator in which the glass remains in the horizontal plane when flexible tape is applied thereto.

A still further objective is to provide an applicator which registers the placement of muntin grid marks onto the flexible tape relative to the glass sheet, rather than equally spacing the marks along the flexible tape.

Still a further objective is to provide an applicator in which the speed of the motor driving the flexible tape increases and decreases in direct response to the tension on the flexible tape and the amount of flexible tape on the spool to assure that the flexible tape remains in constant tension.

Another objective is to provide an applicator which forms corners in the flexible tape in the air, and places the formed corner onto the planar sheet.

Still another objective of the invention is to provide an applicator head positioned above a pair of feed tables such that while the flexible tape is positioned on the planar sheet of one feed table, the completed unit may be removed from the second feed table, and a new planar sheet be positioned thereon to be subsequentially acted upon by the applicator head.

Yet another objective of the invention is to provide an applicator which is of simple construction, which achieves the stated objectives in a simple, effective and inexpensive manner, and which solves problems and satisfies needs existing in the art.

These objections are solved, according to the invention, with the features of claims 1 and 30, respectively.

The improved flexible tape applicator of the present invention includes a base; an applicator head supported by the base and having a path of travel, a flexible tape path extending at least partially through the applicator head, and a flexible tape application zone; a table adapted to retain the sheet adjacent the base; first drive means for moving the applicator head relative to the object along the path of travel at preselected speeds; second drive means carried by the applicator head for driving the flexible tape along the flexible tape path; data collection means for collecting data related to the speed of the first drive means; and first control means operatively connected to the second drive means for receiving data form the data collection means and for altering the speed of the second drive means in response to said collected data and for maintaining a proportional relationship between the speed of operation of the second drive means and the speed of the operation of the first drive means whereby the tension on the flexible tape remains substantially constant throughout the path of travel of the applicator head.

### BRIEF DESCRIPTION OF THE DRAWINGS

The preferred embodiments of the invention, illustrative of the best modes in which applicants have contemplated applying the principles, are set forth in the following description and are shown in the drawings and are particularly and distinctly pointed out and set forth in the appended claims.
FIG. 1 is an end elevational view of the applicator of the present invention;
FIG. 2 is an end elevational view opposite the end view shown in FIG. 1;
FIG. 3 is a side elevational view of the applicator shown in FIG. 1;
FIG. 3A is a side elevational view similar to FIG. 2 with the cradle and applicator head rotate 180°;
FIG. 4 is a top view of the applicator shown in FIG. 1 with the cradle removed;
FIG. 5 is an enlarged side elevational view of the encircled portion shown in FIG. 1, with portions broken away and in section;
FIG. 6 is a sectional view taken along lines 6-6, FIG. 2 with portions broken away;
FIG. 7 is a sectional view taken along lines 7-7, FIG. 4 with portions broken away;
FIG. 8 is a sectional view taken along lines 8-8, FIG. 5 with portions broken away and in section;
FIG. 9 is a sectional view taken along lines 9-9, FIG. 8 with portions removed and shown in dot-dash lines;
FIG. 10 is a sectional view taken along lines 10-10, FIG. 8 with portions removed and shown in dot-dash lines;
FIG. 11 is an enlarged side elevation view of the applicator head of the present invention, looking in the direction of lines 11-11, FIG. 5;
FIG. 12 is an enlarged side elevational view similar to FIG. 11, with the applicator head rotated through 90°;
FIG. 13 is an enlarged elevational view looking in the direction of lines 13-13, FIG. 5;
FIG. 14 is an enlarged elevational view similar to FIG. 13 with the applicator head rotated through 90°;
FIG. 15 is a bottom plan view of the applicator head with portions broken away and shown in dot-dash lines;
FIG. 16 is an enlarged elevational view of the cradle of the present invention;
FIG. 17 is an enlarged elevational view of the cradle shown in FIG. 16 and rotated 90°, and showing the dancer arm in a first position in dot-dash lines, and a second position in solid lines;
FIG. 18 is an enlarged view of the applicator head of the present invention shown with portions cut away and in a first position;
FIG. 19 is an enlarged view of the applicator head similar to FIG. 18 shown in a second position;
FIG. 20 is an enlarged view of the applicator head similar to FIG. 19 shown in a third position;
FIG. 21 is an enlarged view of the applicator head similar to FIG. 20 shown in a fourth position;
FIG. 22 is an enlarged view of the applicator head similar to FIG. 20 looking in the direction of line 22-22, FIG. 21;
FIG. 23 is an enlarged view of the applicator head similar to FIG. 21 shown in a fifth position;
FIG. 24 is an enlarged view of the applicator head similar to FIG. 23 shown in a sixth position;
FIG. 25 is an enlarged view of the applicator head similar to FIG. 24 shown in a seventh position;
FIG. 26 is an enlarged view of the applicator head similar to FIG. 25 shown in an eighth position;
FIG. 27 is an enlarged view of the applicator head similar to FIG. 26 shown in a ninth position;
FIG. 28 is a top plan view of a second embodiment of the present invention shown with the applicator head in a first position;
FIG. 29 is a top plan view similar to FIG. 28 and shown with the applicator head in a second position; and
FIG. 30 is a top plan view similar to FIG. 29 and shown with the applicator head in a third position.

Similar numerals refer to similar parts throughout the drawings.

### DESCRIPTION OF THE PREFERRED EMBODIMENTS

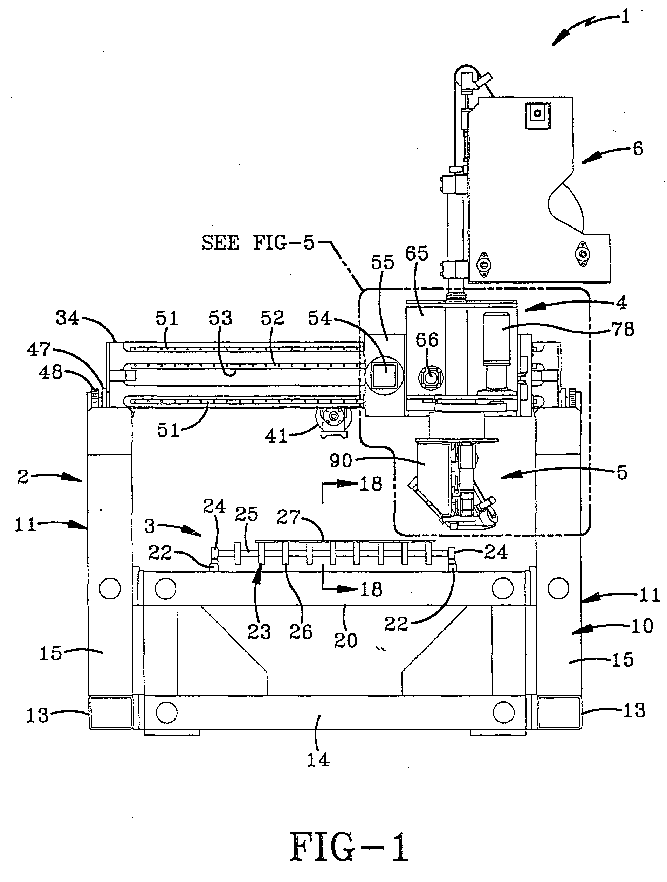

The improved flexible tape applicator of the present invention is indicated generally at 1, and is particularly shown in FIGS. 1-4. Applicator 1 includes a base 2, a table 3, a carriage 4, an applicator head 5 and a cradle 6 for retaining a spool 7.

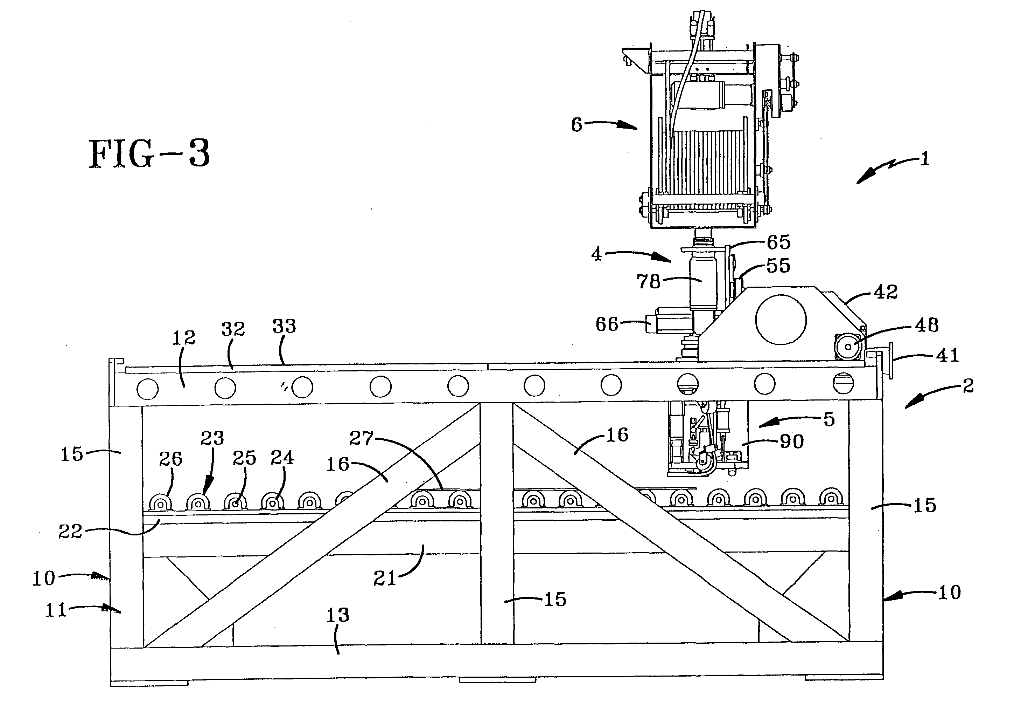

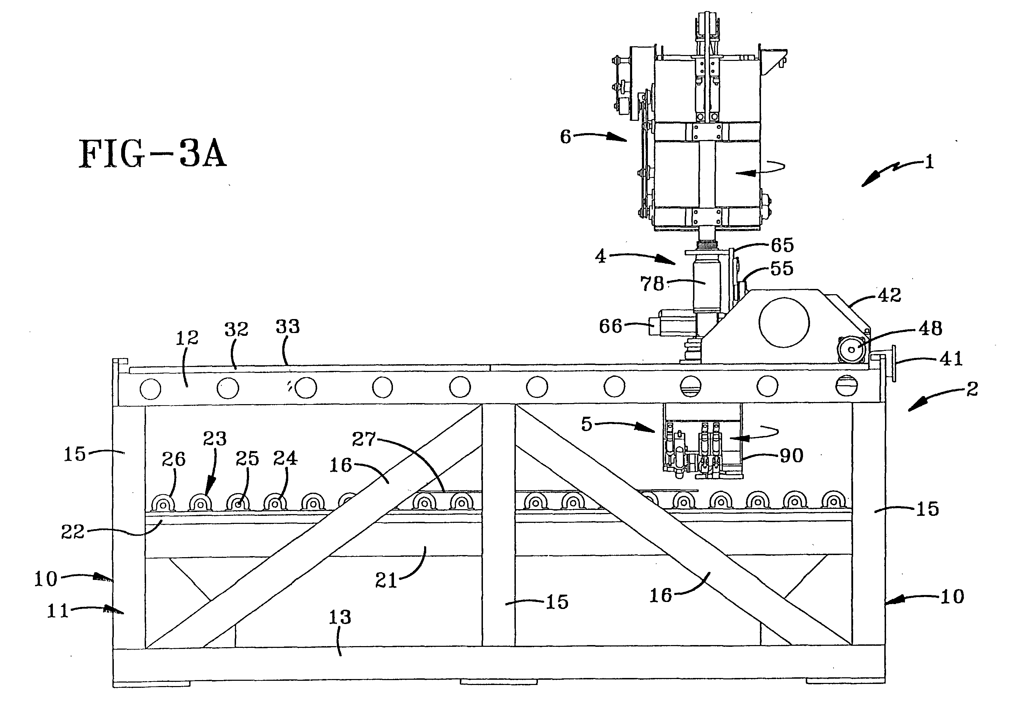

Referring to FIGS. 1-4, base 2 is formed with a pair of endwalls 10 and a pair of sidewalls 11 substantially perpendicular to endwalls 10. Each sidewall 11 is formed with an upper stretcher 12 and a lower stretcher 13 with each endwall being formed with a lower stretcher 14. A vertical post 15 extends intermediate upper stretcher 12 and lower stretcher 13 of sidewalls 11 at each corner of base 2. An additional vertical post 15 (FIGS. 3 and 3A) is positioned intermediate upper stretcher 12 and lower stretcher 13 intermediate the ends of sidewalls 11 for added support. A diagonal brace 16 extends from post 15 in the center of each sidewall 11 adjacent upper stretcher 12 downwardly to each post 15 positioned on the end of sidewalls 11 adjacent lower stretcher 13. Upper stretcher 12 of each sidewall 11 supports carriage 4.

Still referring to FIGS. 1-4, table 3 is formed with a pair of parallel and spaced apart end beams 20. Each end beam 20 is positioned intermediate posts 15 and is parallel to and spaced apart from lower stretchers 14 of endwalls 10. Similarly, table 3 is formed with a pair of parallel and spaced apart side beams 21. Side beams 21 are secured to posts 15, and are parallel to, and spaced apart from upper stretcher 12 and lower stretcher 13 of sidewalls 11. Each end beam 20 receives a pair of mounting blocks 22.

A rectangular roller assembly 23 is formed with a pair of parallel and spaced apart rods 24. One end of each rod is secured to a mounting block 22, and a plurality of parallel and equally spaced apart axles 25 are positioned intermediate rods 24. A plurality of spaced apart rollers 26 are mounted on each axle 25 for supporting a planar sheet 27. While planar sheet 27 may have a variety of sizes and configurations, in the preferred embodiment it is a sheet of glass to be acted upon by applicator head 5 in the manner to be described below.

Table 3 is part of a conveyor unit extending outwardly past endwalls 10 such that glass sheets may be moved along rollers 26 from a previous work station, to a position beneath applicator head 5, to a subsequent position in a manufacturing line. As should also be apparent, roller assembly 23 could be replaced with an air table such that the glass sheets are moved on a bed of air, rather than rollers as is well known in the art.

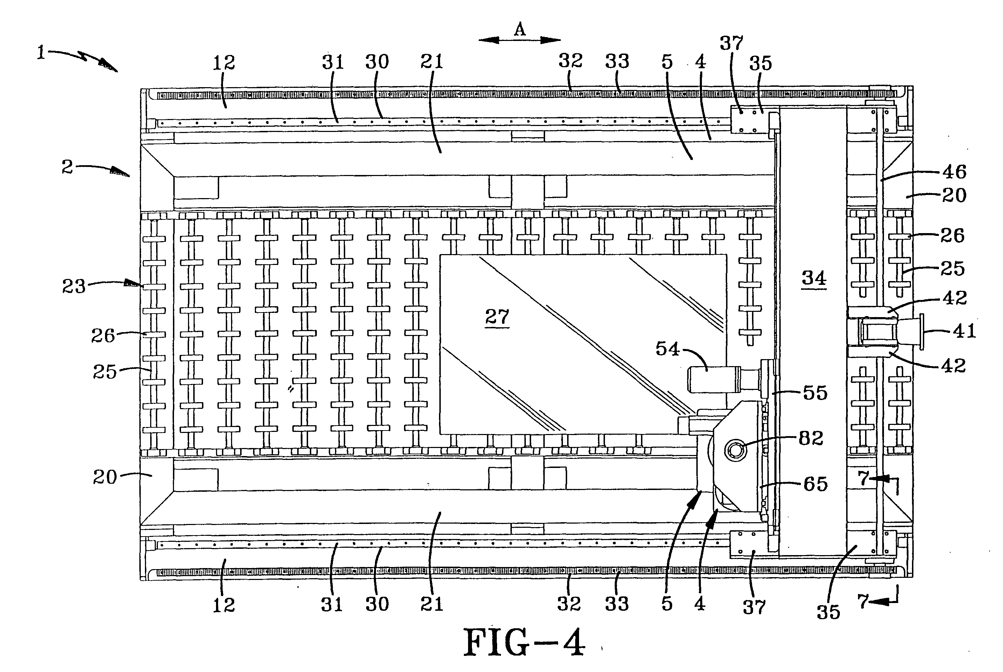

Referring specifically to FIG. 4, a guide rail 30 extends longitudinally along each upper stretcher 12 and is attached thereto via a plurality of bolts 31. Similarly, a rack 32 having a plurality of gear teeth 33 extends longitudinally along each upper stretcher 12 and parallel to guide rails 30.

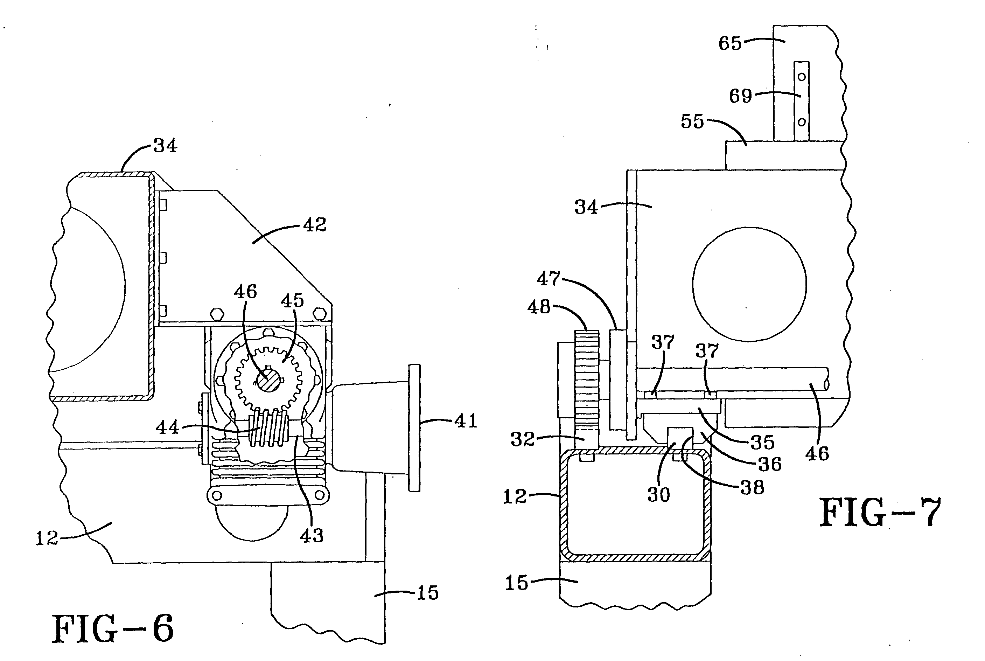

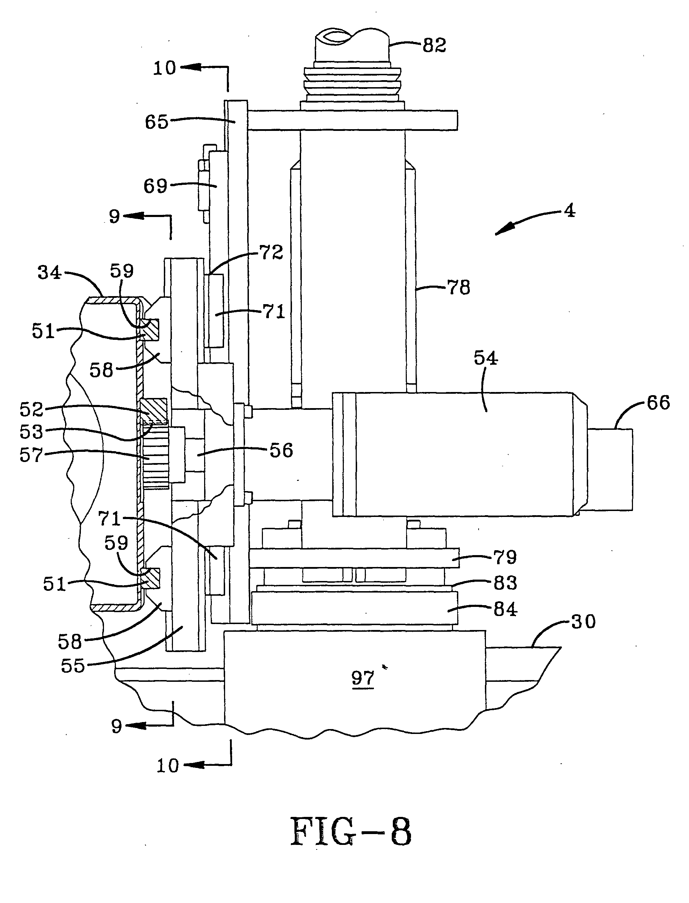

A slider beam 34 is supported on upper stretcher 12 and extends substantially perpendicular thereto. A support block 35 is attached to each end of slide beam 34 with each support block 35 being substantially parallel to one upper stretcher 12. Referring specifically to FIGS. 4 and 7, a guide block 36 is mounted to each support block 35 via a plurality of bolts 37. Each guide block 36 is formed with a groove 38 complementary related to guide rail 30 to permit controlled sliding movement of slider beam 34 on guide rails 30 in the direction of arrow A shown specifically on FIG. 4. Still referring to FIGS. 4 and 7, a first motor 41 is supported from slider beam 34 via a plurality of brackets 42. Motor 41 includes a drive shaft 43 (FIG. 6) having a worm gear 44 attached thereto.

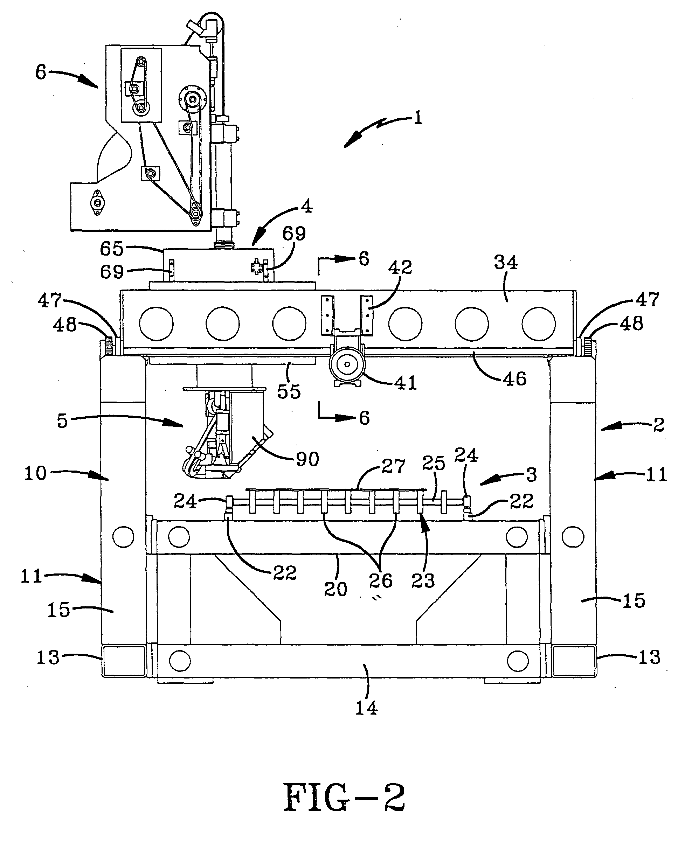

Referring to FIGS. 2, 4, 6 and 7, a follower gear 45 operatively engages worm gear 44 and is attached to a shaft 46 which extends substantially perpendicular to drive shaft 43. Shaft 46 extends along substantially the entire length of slider beam 34 and extends through the ends thereof. Shaft 46 is rotatably supported from bearing blocks 47 attached to each end of slider beam 34, and has a pinion gear 48 (FIG. 7) mounted to each end thereof. Pinion gear 48 is mounted to shaft 46 outwardly of the position of bearing blocks 47 such that bearing blocks 47 are positioned adjacent first motor 41 along the length of shaft 46. In this manner, each pinion gear 48 operatively engages rack 32 to move slider beam 34 in the direction indicated by arrow A in FIG. 4. Specifically, rotation of motor 41 causes drive shaft 43 and interconnected worm gear 44 to rotate. As worm gear 44 rotates, follower gear 45 rotates causing shaft 46 and interconnected pinion gears 48 to rotate. As each pinion gear 48 rotates, it engages a respective rack 32 causing motion in the direction of arrow A. Simultaneously, guide blocks 36 engage guide rails 30 to support the majority of weight of slider beam 34, and to assure that slider beam 34 moves in a direction substantially parallel to upper stretchers 12.

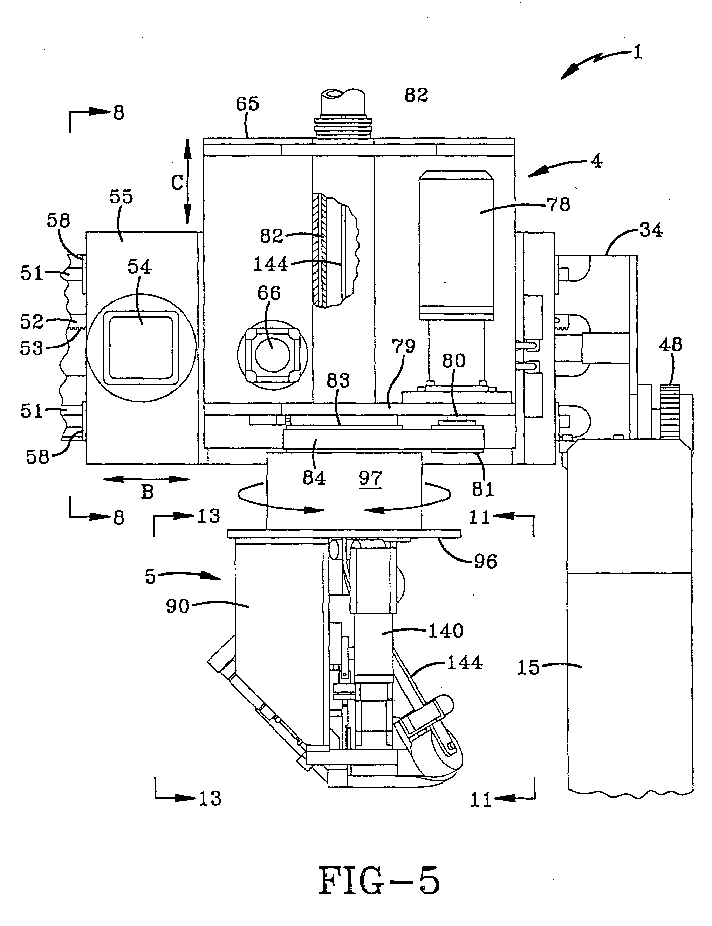

Referring to FIG. 1, a pair of guide rails 51 are attached to slider beam 34 via a plurality of bolts. A rack 52 having a plurality of teeth 53 is also bolted to slider beam 34 and is parallel to, and intermediate guide rails 51. A second motor 54 is carried by carriage 4 and is attached thereto via plate 55. Referring specifically to FIGS. 5 and 8, second motor 54 includes a drive shaft 56 which extends through plate 55 and has a pinion gear 57 mounted thereon. Pinion gear 57 is aligned with rack 52 and operatively engages rack 52 to move carriage 4 in the direction of arrow B (FIG. 5). A plurality of guide blocks 58 are mounted to plate 55 with each block being formed with a groove 59. Each groove 59 is complementary related to a guide rail 51 and operatively engages the same.

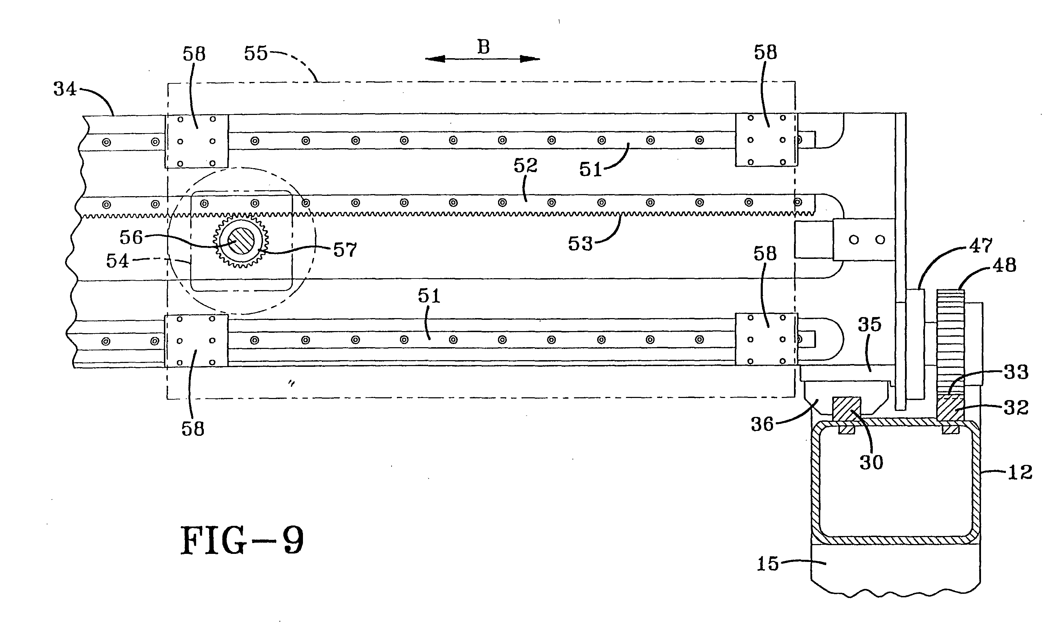

Just as first motor 41 effects movement of slider beam 34 in the direction of arrow A (FIG. 4), activation of second motor 54 causes shaft 56 and interconnected pinion gear 57 to rotate. As interconnected pinion gear 57 rotates, it engages teeth 53 of rack 52 effecting movement of carriage 4 relative to slider beam 34 in the direction of arrow B shown in FIGS. 5 and 9 which is perpendicular to the direction of arrow A in FIG. 4. Similarly, as carriage 4 moves in the direction of arrow B (FIGS. 5 and 9), a pair of guide blocks 58 engage each of a pair of guide rails 51 to assist in supporting carriage 4, and to assure that the movement of carriage 4 is in a direction parallel to rack 52.

Referring to FIGS. 1, 8 and 10, carriage 4 includes a second plate 65 which supports a third motor 66 having a drive shaft 67 and a pinion gear 68 mounted thereon. A plurality of vertical guide rails 69, and a rack 70 parallel to guide rails 69, are attached to second plate 65. A pair of guide blocks 71 are attached to plate 55. A groove 72, complementary related to a guide rail 69, is formed in each guide block 71.

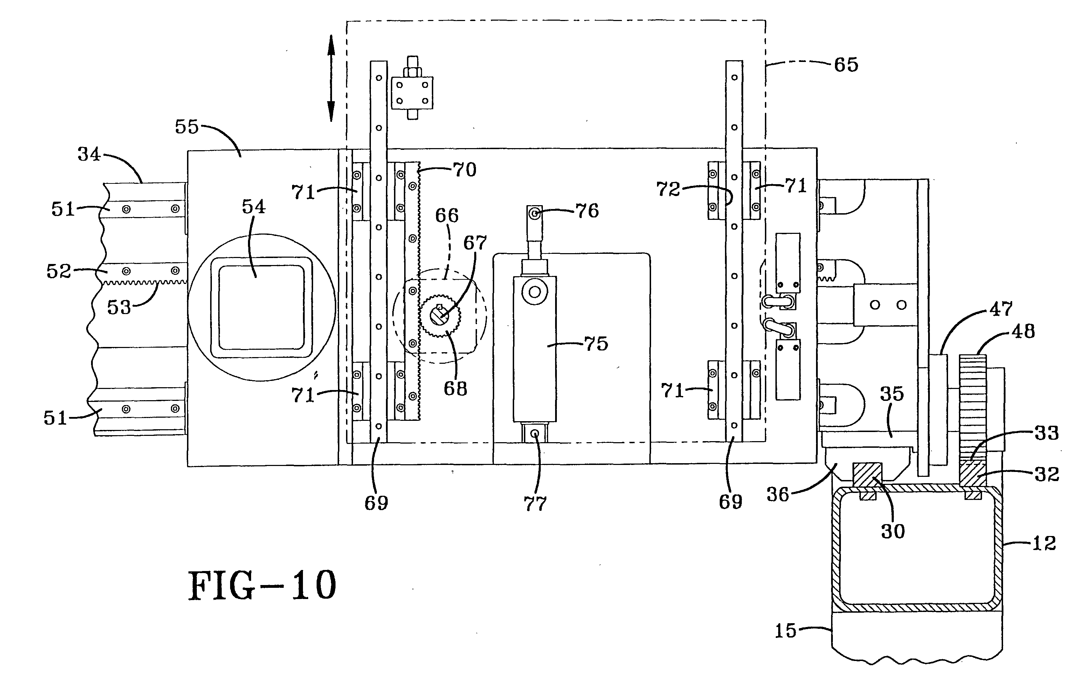

Referring to FIG. 10, as third motor 66 rotates, drive shaft 67 and interconnected pinion gear 68 rotates. Rotation of third motor 66 thus causes pinion gear 68 to operatively engage vertical rack 70 to move carriage 4 upwardly and downwardly with respect to table 3 and slider beam 34. Similarly, as third motor 66 moves carriage 4 in the vertical direction, guide blocks 71 engage guide rails 69 to assure that carriage 4 moves in a direction substantially parallel to rack 70.

Still referring to FIG. 10, a pneumatic actuator 75 is attached to plate 55 at bolt 76, and to second plate 65 at bolt 77. Inasmuch as carriage 4 has significant weight, pneumatic actuator 75 assists third motor 66 in moving carriage 4 in the vertical direction, and in supporting carriage 4 once third motor 66 has moved carried 4 into the preselected position. In this manner, third motor 66 is not overstressed, and the wear on pinion gear 68 and rack 70 associated with cyclic use is substantially reduced.

As can be seen from the above discussion, first motor 41 moves carriage 4 and applicator head 5 in the direction of arrow A shown in FIG. 4, with second motor 54 providing movement in the direction of arrow B shown in FIG. 5, which is substantially perpendicular to the direction of arrow A. Third motor 66 moves carriage 4 and applicator head 5 in the vertical direction, indicated by arrow C in FIG. 5 such that movement is provided throughout the Cartesian coordinate system.

Rotational movement is provided by a fourth motor 78 mounted to carriage 4 and shown specifically in FIG. 5. Fourth motor 78 provides rotational movement of applicator 5 relative to carriage 4 and table 3 as indicated by arrow D (FIG. 5). Motor 78 is mounted to a horizontal plate 79 carried by carriage 4 and includes a drive shaft 80 with a pulley 81 mounted to the end thereof. Applicator head 5 is mounted to carriage 4 via a shaft 82 having a pulley 83 mounted thereto. A drive belt 84 extends around pulleys 81 and 83 whereby activation of motor 78 causes drive shaft and interconnected pulley 81 to rotate. Inasmuch as pulley 81 frictionally engages drive belt 84, pulley 83 rotates, causing hollow shaft 82 and interconnected applicator head 5 to rotate.

In accordance with one of the main features of the present invention, flexible tape applicator 1 thus provides movement of applicator head 5 relative to table 3 in all directions of the Cartesian coordinate system, and also provides fourth motor 78 to rotate applicator head 5 relative to table 3. As should also be apparent from a review of the above, the invention can be manufactured such that motors 41, 54 and 66 may operate to move table 3 rather than applicator head 5 without departing from the spirit of the present invention.

Referring now to a detailed description of applicator head 5, and referring specifically to FIGS. 11-15, applicator head 5 is formed with a body 90. Referring specifically to FIG. 11, body 90 is formed with a vertical first sidewall 91, a pair of parallel and spaced apart endwalls 92, and a second sidewall 93 formed with a vertical section 94 and an angled section 95 angled from vertical section 94 toward first sidewall 91. A top plate 96 is mounted perpendicularly to first sidewall 91, endwalls 92 and vertical section 94 and has a cylindrical boss 97 extending upwardly therefrom. Pulley 83 is supported on cylindrical boss 97.

A first roller assembly 99 is mounted on top wall 96 adjacent first sidewall 91, and includes a pair of parallel and spaced apart downwardly extending L-brackets 100 (FIGS. 11, 12 and 14). An upper guide roller 101 is mounted intermediate spaced apart L-brackets 100 on an axle 102. Additionally, a pair of parallel and spaced apart upper rollers 103 extend outwardly from L-brackets 100 toward first sidewall 91 to rollingly engage a flexible tape 144. Roller assembly 99 is angled relative to first sidewall 91.

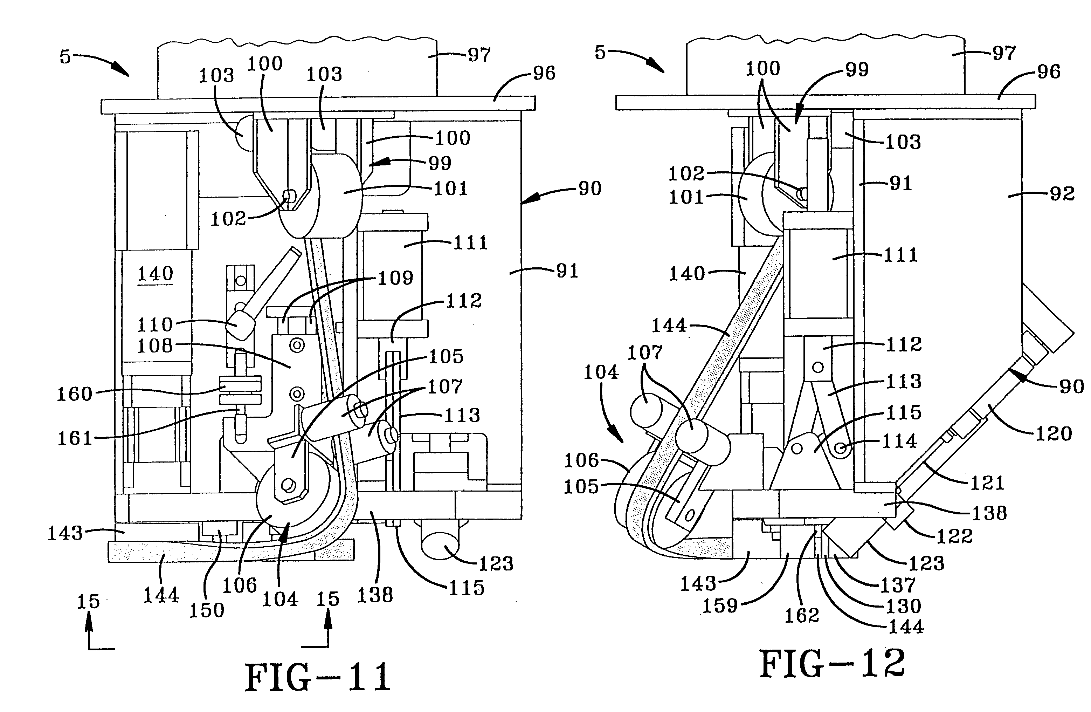

A second roller assembly 104 is mounted to first sidewall 91 and includes a mounting bracket 105 having a lower guide roller 106 mounted thereto and a pair of parallel and spaced apart lower guide rollers 107. Lower guide rollers 107 are spaced apart a distance equal to the width of flexible tape 144 and are spaced relative to lower guide roller 105 such that when the flexible tape exit from between lower guide rollers 107, it engages lower roller 106. As is specifically shown in FIG. 12, guide rollers 105 and 106 are angled with respect to first sidewall 91 for purposes which will be described in detail hereinbelow.

A pneumatic cylinder 111 is mounted to first sidewall 91 and includes a cylinder rod 112. A pair of pivot arms are mounted to the end of cylinder rod 112, with each pivot arm 113 pivotally mounted at a pivot pin 114 to a scissors blade 115.

In accordance with another of the features of the present invention, a pneumatic cylinder 120 (FIG. 13) is mounted to angled section 95 of second sidewall 93 and includes a cylinder piston rod 121 mounted to a retainer clip 122. A printer 123 is mounted within retainer clip 122 with the operating end extending downwardly towards flexible tape 144 as described in detail below. Printer 123 may take a variety of sizes and configurations including thermal printers and inkjet printers, with an inkjet printer being utilized in the preferred embodiment. A slide rod 124 extends outwardly from retainer clip 122 and is substantially parallel to angled section 95 and is received within an aperture formed in a slide block 145. Pneumatic cylinder 120 thus causes printer 123 to move toward and away from flexible tape 144 with the engagement between slide rod 124 and slide block 125 assuring that the movement of printer 123 is substantially parallel to angled section 95 of second sidewall 93. A control unit 119 is provided to activate printer 123 at preselected distances of travel of applicator head 5 for purposes described below.

A second pneumatic cylinder 126 is mounted to angled section 95 of second sidewall 93 and includes a cylinder rod 127 attached to a mounting block 129 via a pivot 128. A slide rod 131 moves within a guide block 132 mounted on angled section 95 to guide mounting block 129 when acted on by second pneumatic cylinder 126. Mounting block 129 carries a follower or pincher pin roller 130 which extends outwardly therefrom, and remains substantially vertical when second pneumatic cylinder 126 is both extended and retracted.

A third pneumatic cylinder 133 is mounted to angled section 95 of second sidewall 93 and includes a cylinder rod 134. Cylinder rod 134 is attached to mounting block 136 at a pivot 135. Similar to mounting block 129, a slide rod 131 moves with a guide block 132 also mounted to angled section 95 to guide mounting block 136 when acted on by pneumatic cylinder 133. A follower or pincher roller 137 is mounted on mounting block 133.

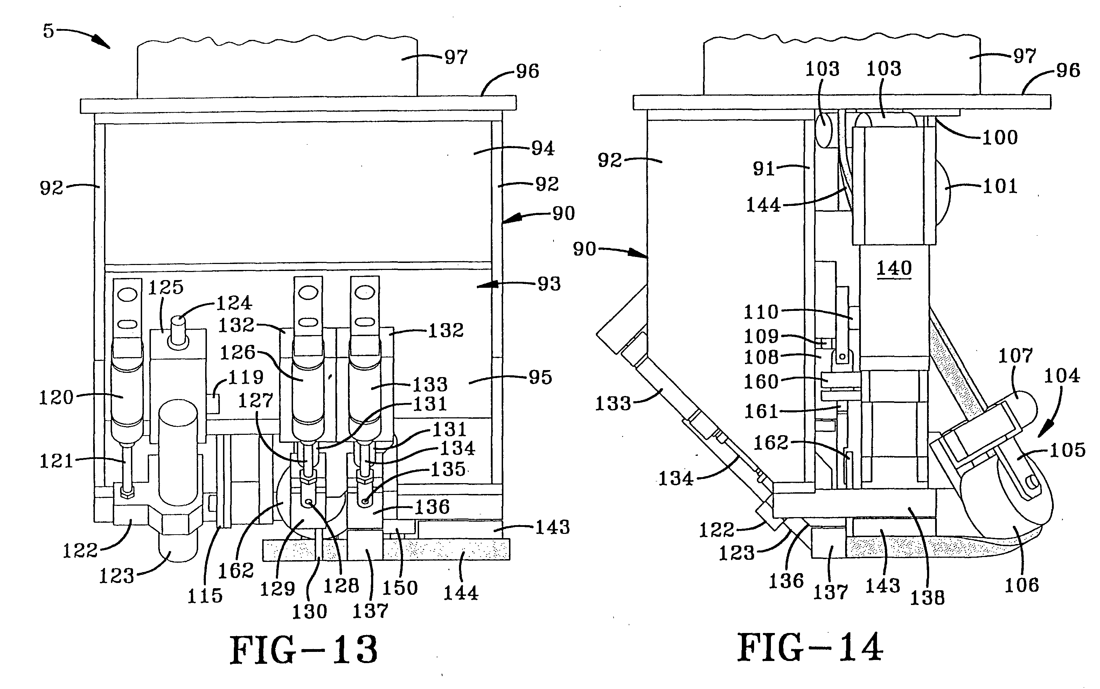

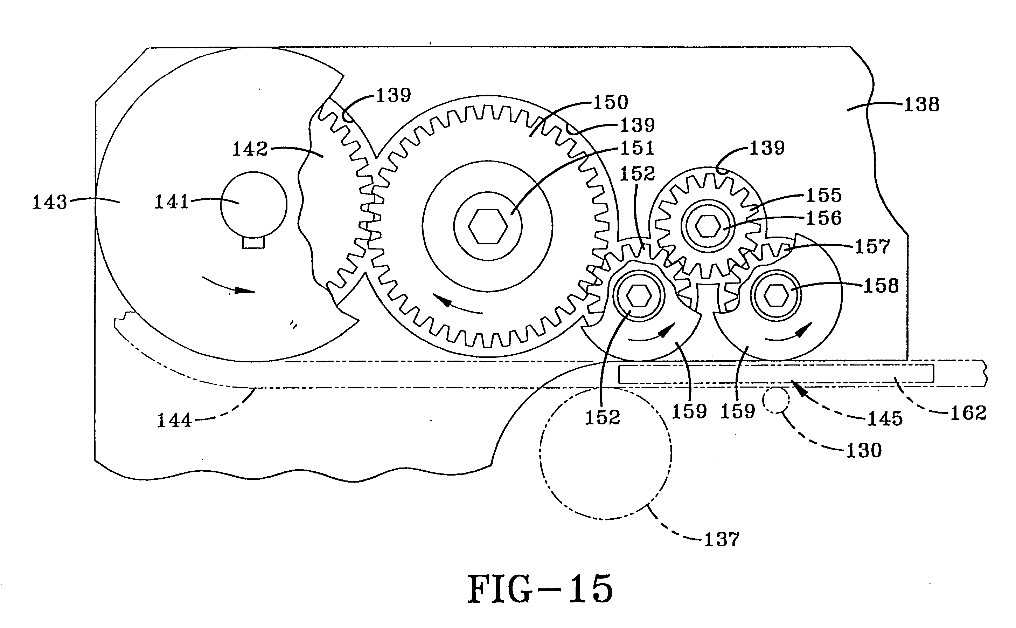

Referring now to FIGS. 13 and 15, a plurality of cylindrical rollers extend downwardly from applicator head 5. The two non-driven rollers, follower roller 137 and follower pin roller 130 have been discussed previously, and are shown in dot dash lines on FIG. 15. The remaining rollers are mounted to shafts which extend downwardly through a lower plate 138, which is formed with a plurality of interconnected holes 139 extending therethrough. A drive motor 140 (FIG. 14) is mounted to lower plate 138 and includes a drive shaft 141 (FIG. 15) attached to a gear 142 and a roller 143 mounted thereon. Roller 143 engages flexible tape 144. Driven gear 142 engages a follower gear 150 mounted on an axle 151 whereby rotation of driven gear 142 in the counterclockwise direction causes follower gear 150 to rotate in the clockwise direction. Follower gear 150, rotating in the clockwise direction, engages a first roller gear 152 mounted on an axle 153. Follower gear 150, rotating in the clockwise direction, causes first roller gear 152 to rotate in the counterclockwise direction. First roller gear 152 operatively communicates with second follower gear 155 mounted on an axle 156 causing second follower gear 155 to rotate in the counterclockwise direction. Second follower gear 155 operatively communicates with a second roller gear 157 mounted on an axle 158 which also rotates in a counterclockwise direction. A driven roller 159 is mounted to axles 153 and 158 such that rollers 143, and 159 all rotate in a counterclockwise direction (FIG. 15). As is also apparent from a review of FIGS. 13 and 15, gears 142, 150, 152, 155 and 157 are received within interconnected holes 139 of lower plate 138. As is also apparent from a review of FIG. 15, non-driven rollers 130 and 137 are spaced apart from driven rollers 159 a distance equal to the width of flexible tape 144.

Still referring to FIGS. 13 and 15, a vertical pressure roller 162 is mounted intermediate non-driven rollers 130 and 137 and driven rollers 159 and is spaced apart from planar sheet 27 a distance equal to the height of flexible tape 144. Vertical pressure roller 162 provides a downward force on flexible tape 144 to assure that the same adheres to planar sheet 27 within an application zone 145. Specifically, pressure roller 162 is mounted to a slide rod follower 108 which engages a pair of slide rods 109. A cylinder 160 is also mounted to first sidewall 91, and includes a cylinder rod 161 attached to pressure roller 162. Constant air pressure is provided on pressure roller 162 via cylinder 160 and cylinder rod 161 to assure that a constant downward force is applied onto flexible tape 144 within application zone 145 to assure that flexible tape 144 securely adheres to planar sheet 27. Additionally, an adjustment lock mechanism 110 is provided such that when slide rod follower 108 is moved relative to slide rods 109 via cylinder 160, it may be locked in position if required.

In accordance with one of the main features of the present invention, cradle 6 is mounted on top of carriage 4, and more particularly is mounted to hollow shaft 82, such that cradle 6 is mounted to the top of shaft 82, and applicator head 5 is mounted to the bottom of shaft 82. Rotation of shaft 82 as a result of the activation of fourth motor 78 thus causes rotation of both actuator head 5 and cradle 6.

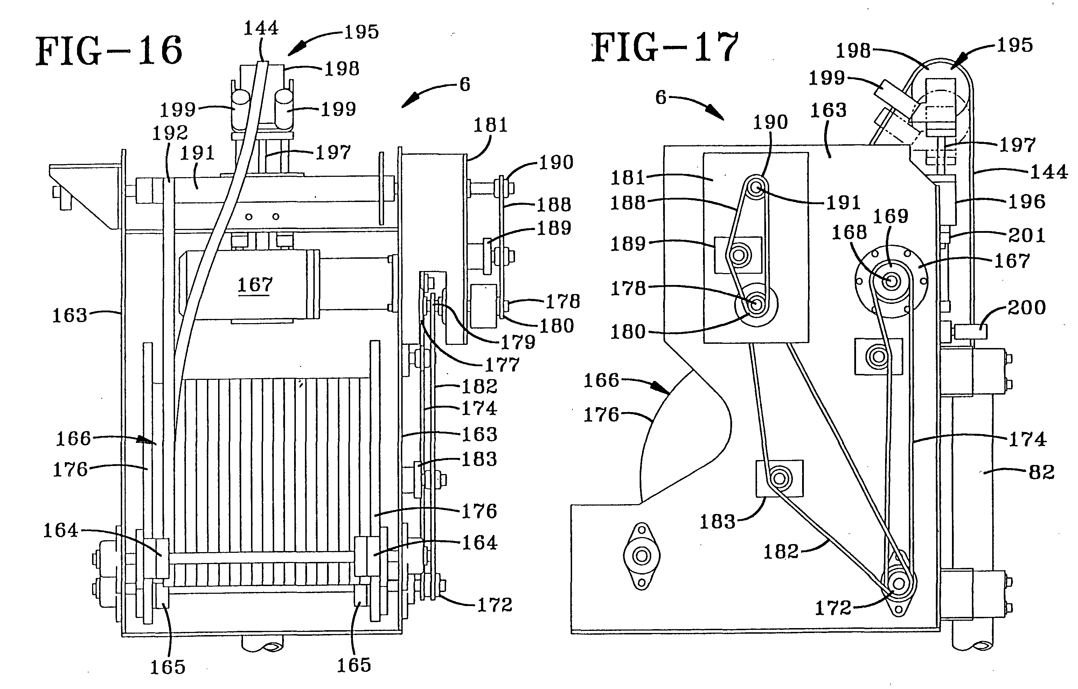

Referring to FIGS. 16 and 17, cradle 6 is formed with a pair of parallel and spaced apart plates 163 and includes a forward support roller 164 and a rearward support roller 165 extending therebetween. Support rollers 164 and 165 support a spool 166 of flexible tape 144 formed with a pair of end plates 176. A drive motor 167 is attached to one plate 163 and extends intermediate plates 163 above spool 166. Motor 167 includes a drive shaft 168 having a drive pulley 169 mounted thereon (FIG. 17). A driven pulley 172 is attached to rearward support roller 165 and is coplanar with drive pulley 169. A first pulley block 173 is attached to plate 163 and is coplanar with drive pulley 169 and driven pulley 172. A first drive belt 174 extends around drive pulley 169, and driven pulley 172, and remains in tension by the force applied via pulley block 173. Activation of motor 167 thus causes drive shaft 168 and interconnected drive pulley 169 to rotate. As drive pulley 169 rotates, first drive belt 174 frictionally engages driven pulley 172 causing pulley 172, and interconnected rearward support roller 165 to rotate. Rearward support pulley 165 engages end plates 176 of spool 166 causing spool 166 to rotate. A bearing set 177 is mounted to one plate 163 and includes an axle 178 rotatably mounted therein. A driven pulley 179 and a follower pulley 180 are mounted to axle 178, and are spaced apart to permit a plate 181 to be placed therebetween. A second drive belt 182 extends around a second groove formed in pulley 172, and driven pulley 179 with second drive belt 182 remaining in tension via its interaction with a pulley block 183. Rotation of driven pulley 172 thus causes driven pulley 179, and consequentially axle 178 and interconnected follower pulley 180 to rotate.

A third drive belt 188 frictionally engages follower pulley 180, and extends around a bearing block 189 and a pulley 190. Pulley 190 is mounted on a take-up reel 191 (FIG. 16) for taking up paper tape backing 192 removed from flexible tape 144. As is apparent from a review of FIGS. 16 and 17, activation of motor 167 causes driven pulley 172 and interconnected rearward support roller 165 to rotate. Inasmuch as rearward support roller 165 frictionally engages end flanges 176 of spool 166, activation of motor 167 causes spool 166 to rotate. Similarly, via the interconnection of motor 167, first drive belt 174, second drive belt 182 and third drive belt 188, activation of motor 167 also causes take-up reel 191 to rotate at a speed proportional to the speed of rotation of spool 166 thereby assuring that paper tape 192 is taken up onto take-up reel 191 at a speed proportional to the speed at which flexible tape 144 is removed from spool 166.

Cradle 6 also includes a pneumatically controlled dancer arm assembly 195. Dancer arm assembly 195 includes a pneumatic cylinder 196 and a cylinder rod 197 operatively communicating with pneumatic cylinder 196. A bearing roller 198 is mounted to the top of cylinder rod 197. Additionally, a guide roller 199 is mounted on either side of bearing roller 198 to guide flexible tape 144 from spool 166 over bearing roller 198 and into hollow shaft 82.

A rear guide roller 200 is positioned on either side of flexible tape 144 just before flexible tape 144 enters hollow shaft 82. Rear guide rollers 200 also guide flexible tape 144 into hollow shaft 82. Additionally, a sensor 201 is mounted adjacent pneumatic cylinder 196 for measuring the amount of deflection of cylinder rod 197 relative to pneumatic cylinder 196. Specifically, flexible tape 144 is fed out from spool 166 over bearing roller 198 and intermediate guide rollers 199 under tension. The higher the tension, the more pressure that will be exerted on cylinder rod 197 causing the same to be inserted further into pneumatic cylinder 196.

The path of flexible tape 144 begins within flexible tape applicator 1 when it is loaded into cradle 6 on a spool 166. The flexible tape is then taken off of spool 166 and paper tape backing 192 is removed separately and wound around take-up reel 191. Flexible tape 144 then passes between guide rollers 199 and over bearing roller 198. The flexible tape then passes vertically and downwardly through rear guide rollers 200 and into the hollow interior of shaft 82 (FIGS. 1, 5, 16 & 17). Flexible tape 144, exits the hollow interior of shaft 182, and passes over upper guide roller 101 and intermediate upper rollers 103 (FIGS. 11 and 12). Flexible tape 144 is rotated about its longitudinal axis such that the width of flexible tape 144 contacts upper guide roller 101 (FIGS. 11-14). Flexible tape 144 then passes through lower guide rollers 107 such that the edge of flexible tape 144 contacts the outer surface of rollers 107. Upon passing through lower guide rollers 107, flexible tape 144 engages lower guide rollers 106 and is rotated in the range of from 10° to 70°, and preferably in the range of from 25° to 60° such that the widest surface of flexible tape 144 is substantially vertical, with the edge of the flexible tape positioned to contact planar sheet 27 (FIGS. 11-14).

Referring now to FIGS. 12, 13 and 15, flexible tape 144 passes around roller 143, and intermediate driven rollers 159 and follower rollers 130 and 137. It is at this position, intermediate roller 159 and 130 within the application zone, that flexible tape 144 is positioned on planar sheet 27. To assist in the application of flexible tape 144 to planar sheet 27, a pressure roller 162 is positioned intermediate driven roller 159 and follower roller 130. Pressure roller 162 is spaced apart from planar sheet 27 a distance substantially equal to the height of flexible tape 144 such that a downward force is applied to flexible tape 144 at the point of application to assure that it remains adhesively attached to the planar sheet. It can be appreciated from a review of FIGS. 15 and 16, that flexible tape 144 is driven along its entire circuitous path of travel through cradle 6, and into applicator head 5. Additionally, motor 140 operates to drive rollers 143 and 159 through interconnected gears 142, 150, 152, 155 and 157 to drive flexible tape 144 adjacent the point of application to planar sheet 27. Inasmuch as flexible tape 144 is pinched between driven rollers 159 and follower rollers 130 and 137, rollers 143 and 159 assure that flexible tape 144 is driven at the application zone, and along the circuitous path of travel through applicator head 5.

As discussed above, cradle 6 is mounted on top of shaft 82, with applicator head 5 being mounted to the bottom thereof such that operation of first motor 41, second motor 54, third motor 66 and fourth motor 78 operates to move both applicator head 5 and cradle 6 through the Cartesian coordinate system. The path of flexible tape 144 thus remains constant and flexible tape 144 is consistently delivered to planar sheet 27 at a higher rate of speed, and under significant control.

In accordance with another feature of the present invention, the application zone intermediate driven roller 159 and follower roller 130, is axially aligned with the center of rotation of cradle 6 and applicator head 5 relative to carriage 4 as caused by operation of fourth motor 78. The center of rotation of applicator head 5 is aligned with the point of application of flexible tape 144 to planar sheet 27 to assure that there will be no angular displacement of flexible tape 144 as a result of rotation of applicator head 5 relative to planar sheet 27 during operation.

Having now described the path of travel of flexible tape 144 through flexible tape applicator 1, the method of operation will be described with specific reference to FIGS. 1-4 and 18-28. Referring first to FIGS. 1-4, motor 41 is activated to move carriage 4 and applicator head 5 in the direction of arrow A shown in FIG. 4, second motor 54 is operated to move carriage 4 and applicator head 5 in the direction of arrow B shown in FIG. 5, which is substantially perpendicular to the direction of arrow A, and third motor 66 is operated to move carriage 4 and applicator head 5 vertically relative to table 3 and planar sheet 27. Fourth motor 78 is operated to rotate applicator head 5 relative to carriage 4 as shown specifically in FIG. 5.

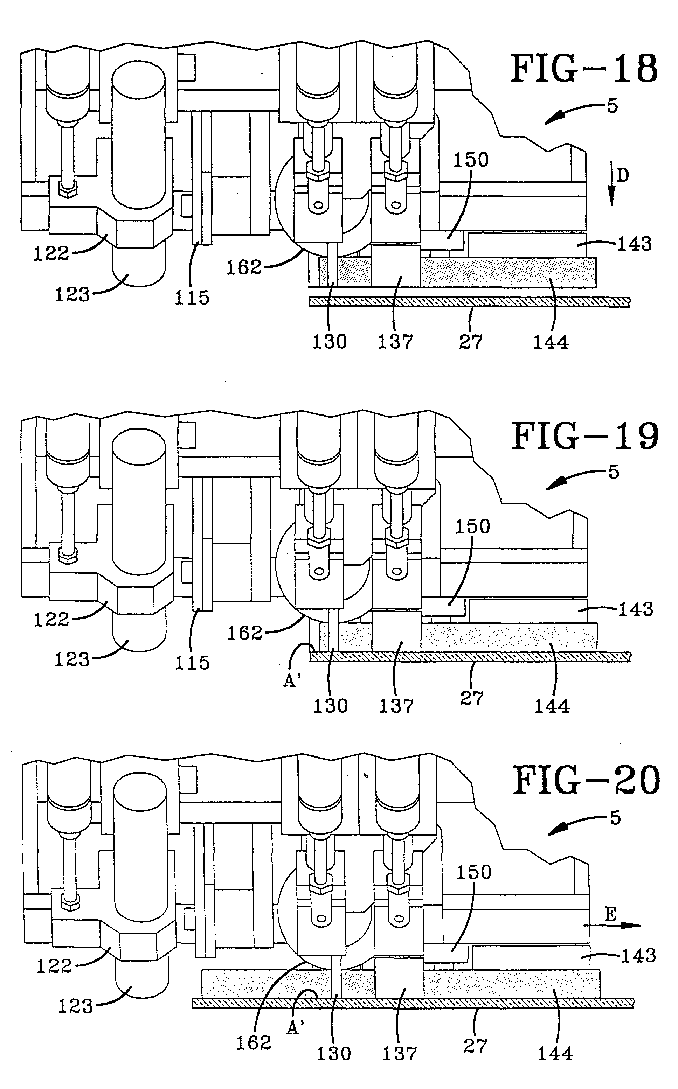

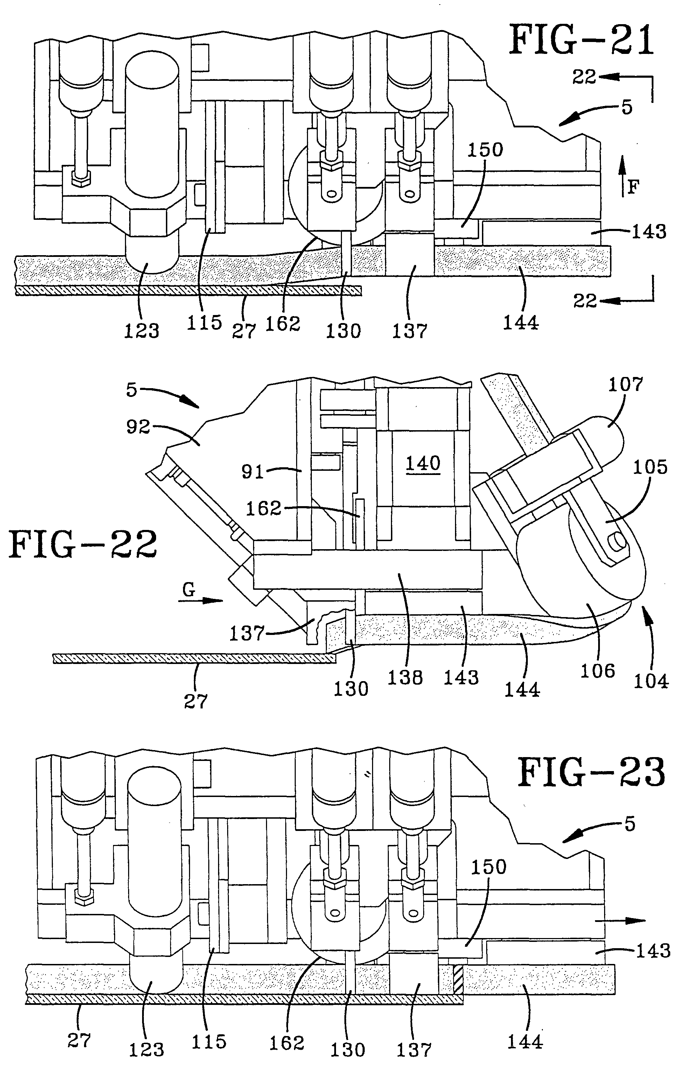

Referring to FIG. 18, applicator head 5 is positioned above planar sheet 27 in the starting position. In this position, flexible tape 144 is positioned a short distance away from planar sheet 27. Third motor 66 is then activated to move applicator head 5 vertically, in the direction indicated by arrow D in FIG. 18 to the position shown in FIG. 19 where flexible tape 144 is positioned on the glass intermediate driven rollers 159 and follower rollers 130 and 137. First motor 41 is then activated to move applicator head 5 in the direction of arrow E shown specifically in FIG. 20. As applicator head 5 moves in the direction of arrow E, motor 140 continues to operate driven rollers 143 and 159 while motor 167 rotates spool 166. Similarly, pressure wheel 162 applies pressure at the point of application of flexible tape 144 intermediate follower pin roller 130 and driven roller 159 to assure that flexible tape 144 adheres to planar sheet 27.

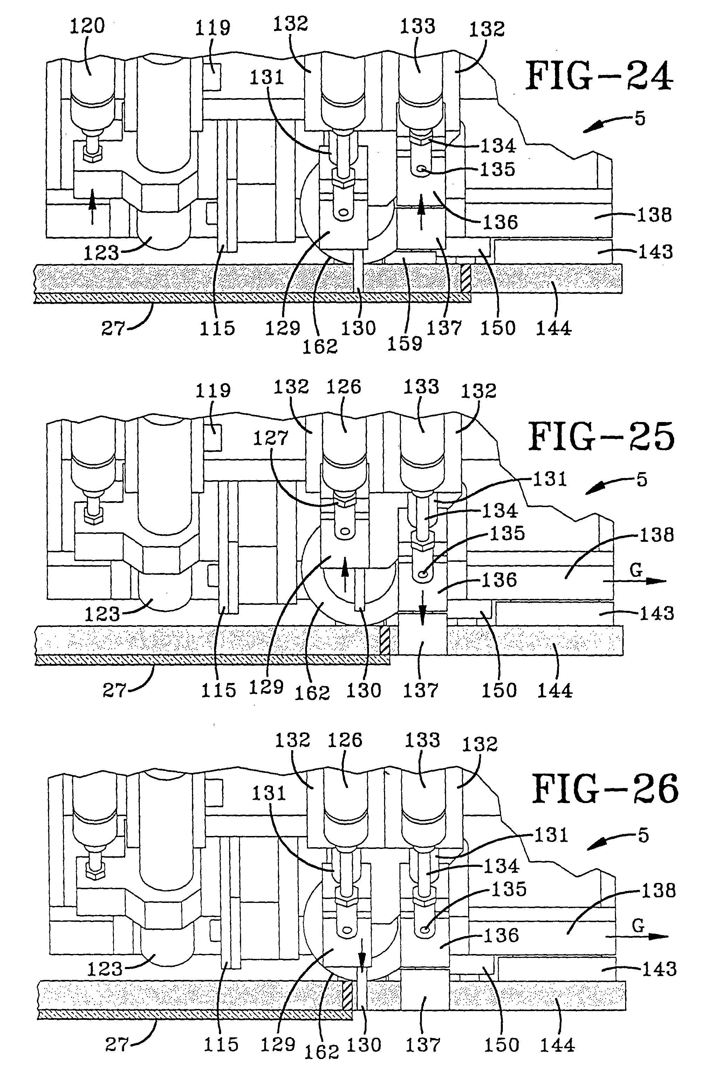

First motor 41 continues to move applicator head 5 along the perimeter of planar sheet 27 until the point of application adjacent follower pin roller 130 reaches a corner of planar sheet 27. Upon reaching the corner, third motor 66 is again activated to raise applicator head 5 in the direction of arrow F shown specifically in FIG. 21. Simultaneously, second motor 54 is activated to move applicator head 5 in the direction by arrow G in FIG. 22. After moving the application point to the position shown specifically in FIG. 22, fourth motor 78 is activated to rotate applicator head through 90°. Once applicator head 5 has been rotated through 90°, it is moved back over planar sheet 27 and downwardly until flexible tape 144 again contacts the perimeter of planar sheet 27. The steps indicated in FIGS. 19-22 are then repeated adjacent each remaining corner of planar sheet 27 until the applicator head 5 approaches fourth corner, where continuous flexible tape 144 was initially adhered to planar sheet 27.

Upon reaching the fourth corner, flexible tape 144 is laid onto planar sheet 27 through the space indicated generally at the letter A in FIGS. 19 and 20 to provide a seal around the entire perimeter of planar sheet 27. However, inasmuch as follower roller 137 and follower pin roller 130 contact flexible tape 144 they are necessarily positioned on the interior of the continuous strip of flexible tape. As such, if the applicator head continued to move in the direction shown specifically in FIG. 23, rollers 130 and 137, as well as printer 123 would contact the first portion of flexible tape 144, pushing it off of planar sheet 27.

Specifically referring to FIG. 24, pneumatic cylinder 133 is activated to retract cylinder rod 134. As cylinder rod 134 retracts, slide rod 131 moves into the complementary shaped recess formed in guide block 132 to assure that mounting block 136, while remaining substantially vertical, moves in the direction parallel to the direction of motion of cylinder rod 134. Cylinder rod 134, interconnected mounting block 136 and follower roller 137 are moved sufficiently in the vertical direction to raise above the upper edge of flexible tape 144 as shown more particularly in FIG. 24.

Upon follower roller 137 reaching the position shown in FIG. 24, second motor 54 is activated to move applicator head 5 in the direction of arrow G shown specifically in FIG. 25. Thereafter, cylinder rod 134 to retract from pneumatic cylinder 133 whereby slide rod 131 extends outwardly from guide block 132 allowing guide roller 137 to reach the position shown in FIG. 25. Thereafter, second pneumatic cylinder 126 is activated to push cylinder rod 127, interconnected mounting block 129 and pin roller 130 upwardly in a manner substantially identical to that which was accomplished when cylinder 133 was activated to move follower roller 137. Again, while second pneumatic cylinder 126 is activated, slide rod 131 will move into guide block 132 to guide the movement of mounting block 129 and interconnected follower pin roller 130 along the appropriate path of travel to the position shown in FIG. 25.

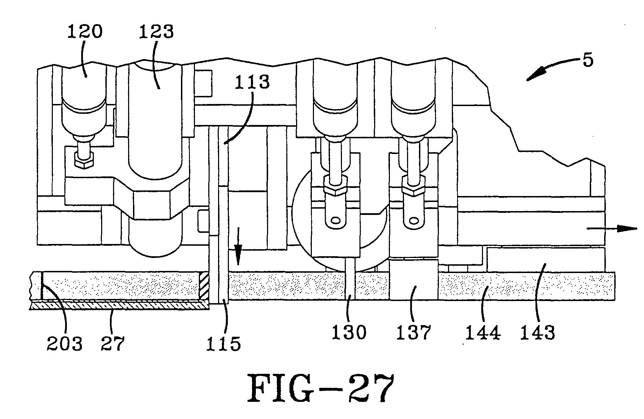

Once pin roller 130 has been moved to the position shown in FIG. 25 via actuation of second pneumatic cylinder 126, second motor 54 is once again activated to move applicator head 5 in the direction of arrow G shown in FIG. 26. Once follower pin roller 130 has been moved beyond the edge of flexible tape 144, follower pin roller 130 is moved to the position shown in FIG. 26. Thereafter, second motor 54 is once again activated to move applicator head 5 in the direction indicated specifically by arrow G in FIG. 27, to a position where knives 115 are just beyond the edge of planar sheet 27. Thereafter, pneumatic cylinder 111 is activated to move cylinder rod 112, and interconnected pivot arms 113 thereby closing knives 115 and cutting flexible tape 144 as shown specifically in FIG. 27. Thereafter, motor 140 and 167 are reversed until flexible tape 144 is moved to the starting position shown in FIG. 18 whereby applicator head 5 may be once again moved to begin laying a flexible tape 144 onto a planar sheet 27. Printer 123 may similarly be moved toward away from flexible tape 144 via operation of pneumatic cylinder 120.

Throughout the application of flexible tape 144 to planar sheet 27, printer 123 prints equally spaced marks along the interior of flexible tape 144. These marks, one of which is shown particularly in FIG. 27 and is indicated generally at 203, indicate the point at which a muntin would be placed for the manufacturing of a divided light window. While marks 203 may be applied by merely activating printer 123 at equal intervals of flexible tape 144 which pass through applicator head 5, such methods of application may create unequal markings. Specifically, inasmuch as a length of flexible tape 144 is utilized to create each corner, that amount of flexible tape 144 will offset equally spaced marks 203 such that the marks following each corner will be offset by an amount equal to the amount of flexible tape 144 utilized to create the corner. As such, printer 123 does not index off the amount of flexible tape passing through a unit, but rather indexes off of the planar sheet to assure that a certain distance has been traveled by the printer before applying a mark 203 to the flexible tape 144. In this manner, marks 203 formed on flexible tape 144 will be accurately positioned on all four sides of planar sheet 27 in order to assure that muntins positioned thereon are accurately spaced. Control unit 119 receives information related to the preselected distances traveled to the distance traveled by applicator head 5, and activates printer 123 at preselected intervals along the path of travel of applicator head 5. It should also be noted that a variety of other information may be applied to flexible tape 144 such as manufacturer and customer information without departing from the spirit of the present invention. Additionally, it should be noted that grid marks may be applied to table 3, with a sensor utilized to read the grid marks and apply marking 103 to flexible tape 144 in accordance with predetermined locations along the grid marks formed on table 3, without departing from the spirit of the present invention.

Motors 140 and 167 are interconnected such that the speed of motor 140 affects the speed of motor 167. Specifically, as motor 167 rotates spool 166, flexible tape 144 passes over dancer arm assembly 195, through hollow shaft 82 and into applicator head 5 where it is subsequently driven by motor 140 adjacent the flexible tape point of application. Motor 167 continuously receives an analog signal from sensor 201 interconnected to dancer arm assembly 195. As discussed above, sensor 201 receives information indicating the position of cylinder rod 197 relative to pneumatic cylinder 196. Referring to FIG. 17, if flexible tape 144 is applying very little pressure on dancer rod assembly 195, cylinder rod 197 will extend outwardly from pneumatic cylinder 196 as shown in solid lines in FIG. 17. In this position, motor 140 is utilizing less flexible tape 144, and therefore is applying little pressure on dancer arm assembly 195. Alternatively, if flexible tape 144 is applying pressure to dancer arm assembly 195, cylinder rod 197 will be compressed into pneumatic cylinder 195 to the position shown in dot-dash lines in FIG. 17. In this position, dancer arm assembly 195 is indicating that motor 140 is requiring more flexible than is being supplied from spool 166.

A number of occurrences create a need to change the speed of motor 167. Specifically, as each layer of flexible tape 144 is removed from spool 166, the circumference of the spool also decreases. As the circumference of each wrap of flexible tape 144 gets smaller, the amount of tape removed during any single revolution of spool 166 also decreases. The speed of motor 167 must then be increased to rotate more often to remove a given length of flexible tape each time an additional wrap of tape is removed from spool 166. Alternatively, less flexible tape should be delivered by motor 167 when applicator head 5 is negotiating a corner, as very little flexible tape 144 is utilized to form the corner, but a significant amount of time passes during corner formation.

Dancer arm assembly 195 thus creates a pressure input read by sensor 201 which pressure input may be utilized to increase the amount of flexible tape 144 delivered by motor 167 in a situation where the dancer arm assembly 195 is in the position shown in dot-dash lines in FIG. 17, i.e., when the pressure on flexible tape 144 is great as motor 140 adjacent the application point requires more flexible tape 144 than motor 167 is currently unwinding from spool 166. Alternatively, dancer arm assembly 195 may create a signal read by sensor 201 indicating that motor 167 is feeding out to much flexible tape and that motor 140 is not utilizing the amount of flexible tape being unwound from spool 166. Such input will slow motor 167 until the speed of motors 167 and 140 are similar.

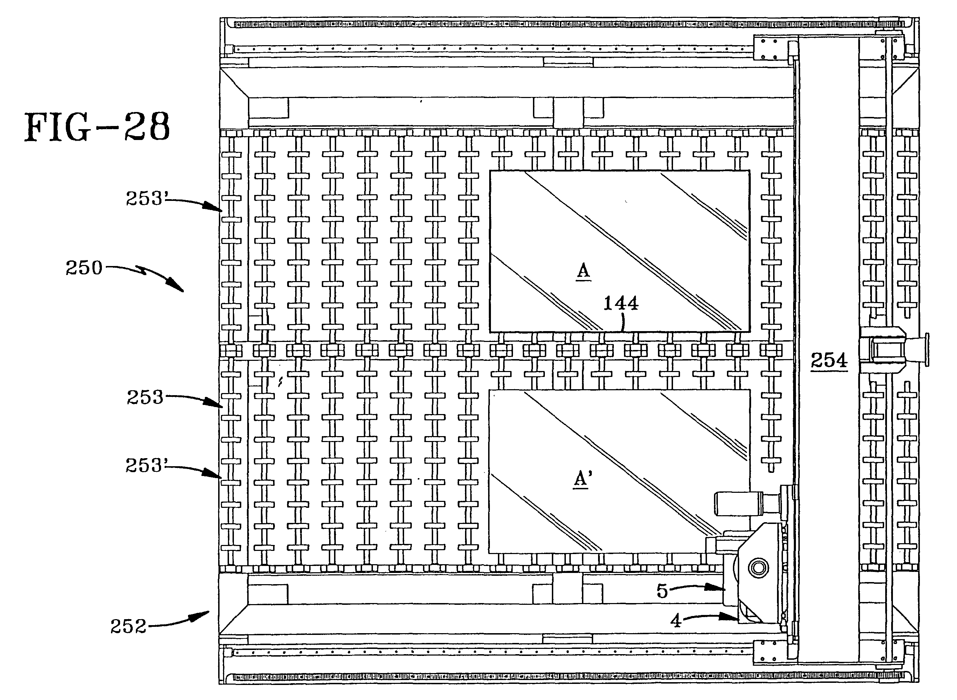

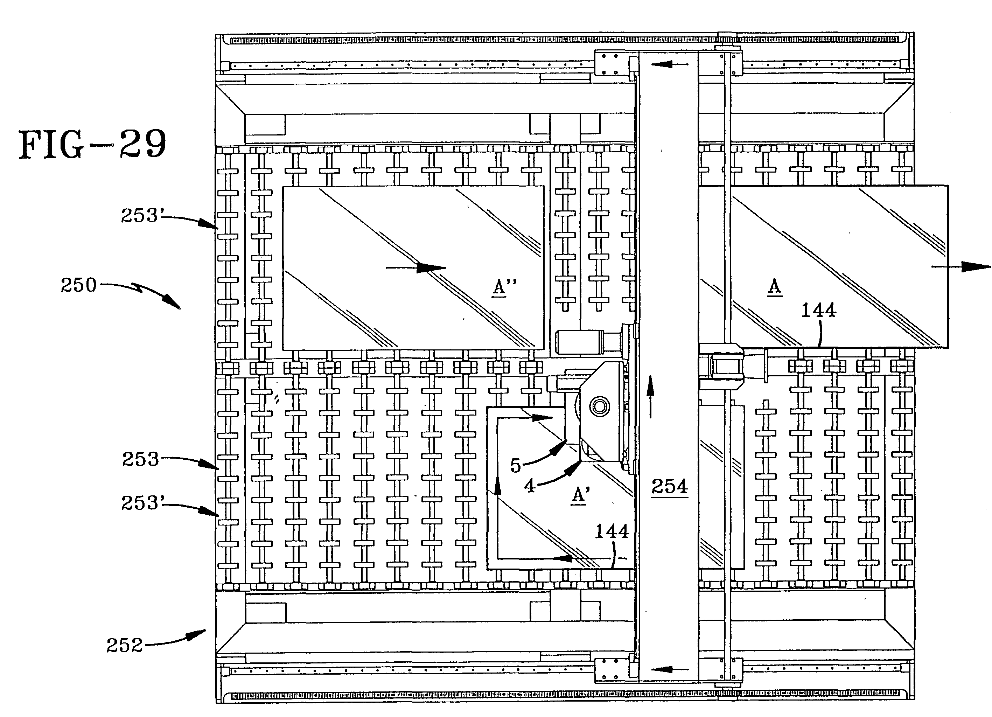

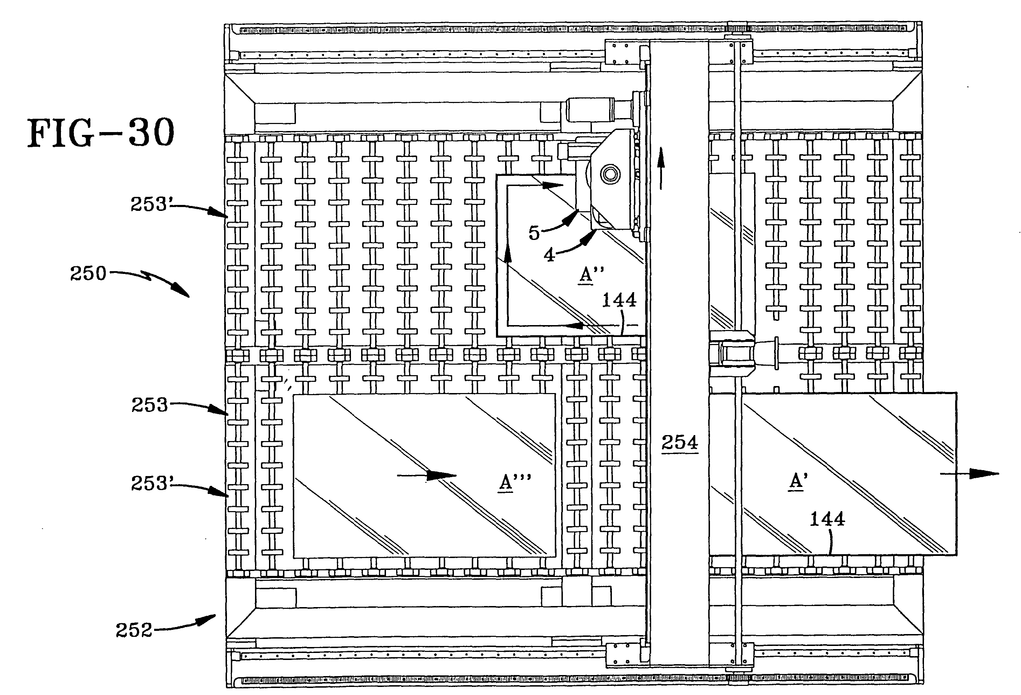

The second embodiment of the invention is indicated generally at 250, and is identical to flexible tape applicator 1 in that it includes a base 252 similar to base 2, a table 253 similar to table 3, a carriage 4, applicator head 5, cradle 6 and spool 7. However, base 252 and table 253 as well as slider beam 254, are twice as wide as base 2, table 3 and slider beam 34. Referring to FIG. 28, table 253 is shown with two conveyor units 253', each support a glass pane, A and A' respectively. FIG. 28 shows flexible tape 144 already applied to planar sheet A and applicator head 5 applying flexible tape 144 to planar sheet A'. As applicator head 5 applies flexible tape 144 to planar sheet A', planar sheet A is removed from table 253 and planar sheet A' is moved in position for subsequent application of flexible tape 144 (FIG. 29). After flexible tape 144 has been applied to sheet A', it is removed in the direction of arrow A as shown specifically in FIG. 30, and applicator head 5 is moved to operate on sheet A'' which was previously moved in position when flexible tape was applied to planar sheet A'. While flexible tape 144 is applied to sheet A'', an additional sheet A''' is moved in position to replace A' to be acted upon subsequently by applicator head 5.

As can be seen from the second embodiment of the present invention, the speed by which planar sheets are moved into and out of flexible tape applicator 1 on table 253 is substantially reduced when compared to that of the first embodiment of the invention as sheets may be moved into and out of flexible tape applicator 250 while applicator head 5 continuously applies flexible tape 144 to a planar sheet.

In summary, a flexible tape applicator 1 is formed with a base 2, a table 3, a cradle 6 and an applicator head 5. Cradle 6 and applicator head 5 are each carried by a carriage 4, and are interconnected to move together. A plurality of motors are provided to move carriage 6 and applicator head 5 through the Cartesian coordinate system relative to table 3, and a fourth motor 78 rotates applicator head 5 relative to carriage 4. A fifth motor 167 is provided which rotates a spool 166 carried by carriage 4 while a sixth motor 140 drives flexible tape 144 adjacent the point of application to the planar sheet. The flexible tape passes over a dancer arm assembly 195 connected to a pneumatic cylinder. Either the pressure on the pneumatic cylinder or the position of the cylinder rod relative to the cylinder is measured to form an analog signal which relates to the amount of pressure exerted by the flexible tape onto the dancer arm assembly. The analog signal is forwarded from a sensor 201 to fifth motor 167 such that as the pressure increases on dancer arm assembly 195, the speed of fifth motor 167 increases. Conversely, if the pressure decreases on dancer arm assembly 195, the speed of fifth motor 167 decreases. The pressure exerted on dancer arm assembly 195 is thus directly related to the amount of flexible tape 144 being applied onto planar sheet 27.

Upon application of a continuous flexible tape to a planar sheet, a plurality of pneumatic cylinders are operated to move the rollers out of the way to assure that the applicator head does not inadvertently disassociate flexible tape 144 from planar sheet 27.

In an alternative embodiment, a table is provided with sufficient width to allow multiple sheets 27 to be operated on by a single applicator head with a new planar sheet being moved in position while the applicator head operates on an existing sheet.

Accordingly, the improved flexible tape applicator is simplified, provides an effective, safe, inexpensive, and efficient device which achieves all the enumerated objectives, provides for eliminating difficulties encountered with prior devices, and solves problems and obtains new results in the art.

In the foregoing description, certain terms have been used for brevity, clearness and understanding; but no unnecessary limitations are to be implied therefrom beyond the requirement of the prior art, because such terms are used for descriptive purposes and are intended to be broadly construed.

Moreover, the description and illustration of the invention is by way of example, and the scope of the invention is not limited to the exact details shown or described.

## Claims

1. An applicator for applying a flexible tape (144) to a sheet (27) comprising:
a base (2;252);
an applicator head (5) supported by the base (2) and having a path of travel, a flexible tape path extending at least partially through the applicator head (5), and a flexible tape application zone;
a table (3;253) adapted to retain the sheet adjacent the base (2);
first drive means (41,54,66) for moving the applicator head (5) relative to the object along the path of travel at preselected speeds; and
second drive means (140,167) carried by the applicator head (5) for driving the flexible tape (144) along the flexible tape path;
**characterized by**
data collection means for collecting data related to the speed of the first drive means (41,54,66);
first control means operatively connected to the second drive means (140,167) for receiving data from the data collection means and for altering the speed of the second drive means (140) in response to said collected data and for maintaining a proportional relationship between the speed of operation of the second drive means (140,167) and the speed of the operation of the first drive means (41,54,66) whereby the tension on the flexible tape (144) remains substantially constant throughout the path of travel of the applicator head (5).

2. An applicator as defined in claim 1 in which the base (2;252) includes a pair of parallel and spaced apart stretchers (12,13) and a slider beam (34) supported by said stretchers (12,13); and in which the applicator head is supported from said slider beam (34).

3. An applicator as defined in claim 2 in which the table (3;253) is positioned intermediate the stretchers (12,13) and below the applicator head (5).

4. An applicator as defined in claim 3 in which the table (3;253) is substantially horizontal.

5. An applicator as defined in Claim 2 in which the first drive means (41,54,66) includes a first motor (41) for moving the applicator head (5) in a direction parallel to the stretchers (12,13), a second motor (54) for moving the applicator head (5) in a direction perpendicular to the stretchers (12,13), and a third motor (66) for vertically moving the applicator head (5) relative to the table (3;253).

6. An applicator as defined in claim 5 in which at least one rack (32) extends parallel to the stretchers (12,13); in which the first motor (41) includes a drive shaft (43); in which a pinion gear (48) is attached to the drive shaft (43) and operatively engages the rack (32) for moving the applicator head (5) in a direction parallel to the stretchers (12,13); in which at least one rack (52) extends perpendicular to the stretchers (12,13); in which the second motor (54) includes a drive shaft (56); in which a pinion gear (57) is attached to the drive shaft (56) and operatively engages the rack (52) for moving the applicator head (5) in a direction perpendicular to the stretchers.

7. An applicator as defined in claim 1 in which second drive means (140,167) includes a first drive motor adapted for feeding flexible tape (144) to the applicator head (5), and a second drive motor adapted for driving the flexible tape (144) along the flexible tape path.

8. An applicator as defined in claim 7 further comprising a cradle (6) for supporting a spool of flexible tape (144); in which the first drive motor (41) is carried by the cradle (6) and in which the second drive motor (54) is carried by the applicator head (5).

9. An applicator as defined in claim 8 in which the cradle (6) is carried by the applicator head (5).

10. An applicator as defined in claim 7 in which the data collection means includes a dancer arm (195) adapted to contact the flexible tape (144) and deflect in response to tension on the flexible tape (144) and positioning means for indicating the deflection of the dancer arm (195); in which the first control means operatively communicates with the positioning means to receive data relating to the dancer arm (195) deflection; and in which the control means controls the speed of operation of the second drive means (140,167), depending on the deflection of the dancer arm (195).

11. An applicator as defined in claim 10 in which the first control means is electronically attached to the first drive motor (140) of the second drive means (140,167) for increasing and decreasing the speed of the first drive motor (140).

12. An applicator as defined in claim 11 in which the dancer arm (195) is carried on the applicator head (5) along the flexible tape path.

13. An applicator as defined in claim 12 in which the positioning means includes a cylinder (196) and a piston (197); in which one of the cylinder (196) and piston (197) is attached to the dancer arm (195) whereby said piston (197) and cylinder (196) are movable relative to each other depending on the deflection of the dancer arm (195) to alter the pressure within the cylinder (196); and in which the positioning means further includes pressure measuring means (201) for measuring the pressure in the cylinder (196) to determine the amount of deflection of the dancer arm (195).

14. An applicator as defined in claim 12 in which the positioning means includes a cylinder (196) and a piston (197); in which one of the cylinder (196) and piston (197) is attached to the dancer arm (195) whereby deflection of the dancer arm (195) causes said one of the piston (197) and cylinder (196) to move relative to the other of the piston (197) and cylinder (196); and in which the positioning means further includes measuring means (201) for measuring the actual distance traveled by the piston in the cylinder (196) to determine the amount of defection of the dancer arm (195).

15. An applicator as defined in claim 7 in which a plurality of rollers (143,162) are positioned on the head (5) adjacent the application zone.

16. An applicator as defined in claim 15 in which at least one roller (143) adjacent the application zone is driven by the second drive motor (167).

17. An applicator as defined in claim 16 in which at least one of the rollers (162) is attached to a retraction means for retracting the roller (162) over the flexible tape (144).

18. An applicator as defined in claim 17 in which the retraction means is a cylinder (160); in which the cylinder (160) has a piston (161) attached to at least one roller (162) for retracting a roller (162) over the flexible tape (144).

19. An applicator as defined in claim 18 in which a pincher roller (130) is positioned adjacent to and spaced apart from each driven roller (143), and in which the flexible tape (144) is positioned intermediate the driven rollers (143) and the pincher rollers (130).

20. An applicator as defined in claim 19 in which a pressure roller (162) is positioned intermediate the driven (143) and the pincher rollers (130) for applying a downward force on the flexible tape (144).

21. An applicator as defined in claim 20 in which a pressure roller (162) is provided for supplying a downward force onto the pressure roller.

22. An applicator as defined in claim 15 in which a printer (123) is carried by the applicator head (5) for applying muntin marks onto the flexible tape (144).

23. An applicator as defined in claim 22 in which the printer (123) is carried by the applicator head (5) behind the plurality of rollers whereby the printer (123) prints the flexible tape (144) after it has passed through the rollers.

24. An applicator as defined in claim 23 in which the printer (123) is adapted to print on the flexible tape (144) when the flexible tape (144) is positioned on the planar sheet (27).

25. An applicator as defined in claim 24 further comprising second control means for measuring the distance traveled by the applicator head (5) relative to the table (3;253), and for activating the printer (123) at predetermined distances of travel of the applicator head (5) relative to the table (3;253).

26. An applicator as defined in claim 25 in which retraction means (122) are attached to the printer (123) to move the printer (123) toward and away from the planar sheet (27).

27. An applicator as defined in claim 9 in which a shaft (82) extends between the carriage (6) and the applicator head (5); in which rotation of the shaft (82) causes rotation of the applicator head (5) and the carriage (6); and in which a motor is operatively associated with the shaft (82) to rotate said shaft (82).

28. An applicator as defined in claim 27 in which the flexible tape (144) passes from the cradle (6) to the applicator head (5) through the shaft (82).

29. An applicator as defined in claim 10 in which the flexible tape path is constant from the dancer arm (195) to the application zone.

30. A method of applying a flexible tape (144) to a sheet (27) comprising the steps of:
moving an applicator head (5) having a flexible tape path along a predetermined path while simultaneously applying flexible tape (144) to the sheet (27) at predetermined speeds; and
providing a flexible tape drive means (140,167) for driving the flexible tape (144) to the applicator head (5) while applying the flexible tape (144) to the sheet (27);
**characterized by** the steps of
measuring the tension on the flexible tape (144) along the flexible tape path and creating a tension signal;
forwarding the tension signal to a control unit;
controlling the speed of the flexible tape drive means (140,167) with the control unit in response to said tension signal for maintaining a proportional relationship between the speed of operation of the flexible tape drive means (140,167) and the predetermined speeds whereby the tension on the flexible tape remains substantially constant throughout the path of travel of the applicator head (5).

31. The method as defined in claim 30 including the further step of determining the tension on the flexible tape (144) by passing the flexible tape (144) over a dancer arm (195); determining the deflection of the dancer arm (195); and changing the speed of the flexible tape drive means (140,167) in direct relation to the amount of deflection of the dancer arm (195).

32. The method as defined in claim 31 comprising the further steps of providing a motor (140) as the flexible tape drive means for rotating a spool for dispensing the flexible tape (144); positioning the dancer arm (195) intermediate the motor (140) for driving the spool, and an application zone along the flexible tape path; and increasing the speed of the motor (140) rotating the spool as the measured deflection increases, and decreasing the rate of rotation of the motor (140) driving the spool as the measured deflection decreases.

33. The method as defined in claim 32 including the further step of printing muntin marks on to the flexible tape (144) after the flexible tape (144) is positioned an the sheet (27) with a printer (103).

34. The method as defined in claim 33 including the further step of determining the distance traveled by the applicator head (5) having a path of travel relative to the sheet (27); and activating the printer (123) at preselected distances along the path of travel of the applicator head (5) relative to the sheet (27) for printing muntin marks.

35. The method as defined in claim 34 comprising the further steps of providing a plurality of rollers (143;162) adjacent the application zone; retracting at least one of said rollers (162) to allow the roller (162) to pass over the flexible tape (144).

36. The method as defined in claim 35 including the further step of driving at least one of the rollers (143) adjacent the application zone.

37. The method as defined in claim 31 comprising the further step of raising the applicator head (5) prior to forming a corner in the flexible tape (144); forming a corner while a portion of the flexible tape (144) is supported above the planar sheet (27) by the applicator head (5); and replacing the preformed corner onto the sheet (27) by lowering the applicator head (5).

38. The method as defined in claim 31 comprising the further step of providing a first conveyor and a second conveyor beneath the applicator head (5); providing a first sheet and a second sheet onto the first conveyor and the second conveyor; applying a flexible tape (144) onto one of the first sheet and second sheet while removing the other of the first sheet and second sheet from the associated conveyor; replacing said other of the first sheet and second sheet with a third sheet while continuing to lay flexible tape (144) onto said one of the first sheet and second sheet for subsequent application of flexible tape (144) by the applicator head (5).

## Patentansprüche

1. Applikator zum Auftragen eines flexiblen Bandes (144) auf eine Bahn (27), mit:
einer Basis (2;252);
einem Applikatorkopf (5), der von der Basis (2) gehalten ist und für den ein Bewegungsweg, ein mindestens teilweise durch den Applikatorkopf (5) verlaufender Weg für das flexible Band, und eine Applikationszone für das flexible Band vorgesehen sind;
einem Tisch (3;253), der die Bahn an der Basis (2) rückhalten kann;
einer ersten Antriebsvorrichtung (41,54,66), um den Applikatorkopf (5) relativ zu dem Objekt mit vorgewählten Geschwindigkeiten entlang des Bewegungswegs zu bewegen; und
einer von dem Applikatorkopf (5) gehaltenen zweiten Antriebsvorrichtung (140,167) zum Antreiben des flexiblen Bandes (144) entlang des Wegs für das flexible Band;
**gekennzeichnet durch**
eine Datenerfassungseinrichtung zum Erfassen auf die Geschwindigkeit der ersten Antriebsvorrichtung (41,54,66) bezogener Daten;
eine betriebsmäßig mit der zweiten Antriebsvorrichtung (140,167) verbundenen ersten Steuereinrichtung zum Empfangen von Daten von. der Datenerfassungseinrichtung und zum Ändern der Geschwindigkeit der zweiten Antriebsvorrichtung (140) als Reaktion auf die erfassten Daten und zum Beibehalten einer proportionalen Beziehung zwischen der Betriebsgeschwindigkeit der zweiten Antriebsvorrichtung (140,167) und der Betriebsgeschwindigkeit der ersten Antriebsvorrichtung (41,54,66), wo**durch** die auf das flexible Band (144) einwirkende Spannung über den gesamten Bewegungsweg des Applikatorkopfs (5) hinweg im wesentlichen konstant bleibt.

2. Applikator nach Anspruch 1, bei dem die Basis (2;252) ein Paar paralleler sowie mit Abstand angeordneter Streckvorrichtungen (12,13) und einen von den Streckvorrichtungen (12,13) gehaltenen Gleitträger (34) aufweist; und bei dem der Applikatorkopf von dem Gleitträger (34) gehalten ist.

3. Applikator nach Anspruch 2, bei dem der Tisch (3;253) zwischen den Streckvorrichtungen (12,13) und unter dem Applikatorkopf (5) positioniert ist.

4. Applikator nach Anspruch 3, bei dem der Tisch (3;253) im wesentlichen horizontal ist.

5. Applikator nach Anspruch 2, bei dem die erste Antriebsvorrichtung (41, 54,66) einen ersten Motor (41) zum Bewegen des Applikatorkopfs (5) in einer parallel zu den Streckvorrichtungen (12,13) verlaufenden Richtung, einen zweiten Motor (54) zum Bewegen des Applikatorkopfs (5) in einer rechtwinklig zu den Streckvorrichtungen (12,13) verlaufenden Richtung und einen dritten Motor (66) zum vertikalen Bewegen des Applikatorkopfs (5) relativ zu dem Tisch (3;253) aufweist.

6. Applikator nach Anspruch 5, bei dem mindestens eine Zahnstange (32) parallel zu den Streckvorrichtungen (12,13) verläuft; bei dem der erste Motor (41) eine Antriebswelle (43) aufweist; bei dem mit der Antriebwelle (43) ein Zahnrad (48) verbunden ist und betriebsmäßig an der Zahnstange (32) angreift, um den Applikatorkopf (5) in einer parallel zu den Streckvorrichtungen (12,13) verlaufenden Richtung zu bewegen; bei dem mindestens eine Zahnstange (52) rechtwinklig zu den Streckvorrichtungen (12,13) verläuft; bei dem der zweite Motor (54) eine Antriebswelle (56) aufweist; bei dem mit der Antriebswelle (56) ein Zahnrad (57) verbunden ist und betriebsmäßig an der Zahnstange (52) angreift, um den Applikatorkopf (5) in einer rechtwinklig zu den Streckvorrichtungen verlaufenden Richtung zu bewegen.

7. Applikator nach Anspruch 1, bei dem die zweite Antriebsvorrichtung (140, 167) einen ersten Antriebsmotor, der zum Zuführen flexiblen Bands (144) zu dem Applikatorkopf (5) geeignet ist, und einen zweiten Antriebsmotor aufweist, der zum Antreiben des flexiblen Bands (144) entlang des Wegs für das flexible Band geeignet ist.

8. Applikator nach Anspruch 7, ferner mit einer Halterung (6) zum Halten einer Spule mit flexiblem Band (144); wobei der erste Antriebsmotor (41) von der Halterung (6) gehalten ist und wobei der zweite Antriebsmotor (54) von dem Applikatorkopf (5) gehalten ist.

9. Applikator nach Anspruch 8, bei dem die Halterung (6) von dem Applikatorkopf (5) gehalten ist.

10. Applikator nach Anspruch 7, bei dem die Datenerfassungseinrichtung einen Tänzerarm (195), der in der Lage ist, als Reaktion auf eine auf das flexible Band einwirkende Spannung das flexible Band (144) zu kontaktieren und eine Auslenkbewegung durchzuführen, und eine Positionierungseinrichtung zur Anzeige der Auslenkung des Tänzerarms (195) aufweist; bei dem die erste Steuereinrichtung betriebsmäßig derart mit der Positionierungseinrichtung kommuniziert, dass sie Daten zu der Auslenkung des Tänzerarms (195) empfängt; und bei dem die Steuereinrichtung die Betriebsgeschwindigkeit der zweiten Antriebsvorrichtung (140, 167) in Abhängigkeit von der Auslenkung des Tänzerarms (195) steuert.

11. Applikator nach Anspruch 10, bei dem die erste Steuereinrichtung elektronisch mit dem ersten Antriebsmotor (140) der zweiten Antriebsvorrichtung (140,167) verbunden ist, um die Geschwindigkeit des ersten Antriebsmotors (140) zu vergrößern und zu verkleinern.

12. Applikator nach Anspruch 11, bei dem der Tänzerarm (195) an dem Applikatorkopf (5) entlang des Wegs für das flexible Band gehalten ist.

13. Applikator nach Anspruch 12, bei dem die Positionierungseinrichtung einen Zylinder (196) und einen Kolben (197) aufweist; bei dem ein aus dem Zylinder (196) und dem Kolben (197) ausgewähltes Element mit dem Tänzerarm (195) verbunden ist, wodurch der Kolben (197) und der Zylinder (196) in Abhängigkeit von der Auslenkung des Tänzerarms (195) relativ zueinander bewegbar sind, um den Druck innerhalb des Zylinders (196) zu ändern; und bei dem die Positionierungseinrichtung ferner eine Druckmesseinrichtung (201) aufweist, um zwecks Bestimmens des Auslenkbetrags des Tänzerarms (195) den Druck in dem Zylinder (196) zu messen.

14. Applikator nach Anspruch 12, bei dem die Positionierungseinrichtung einen Zylinder (196) und einen Kolben (197) aufweist; bei dem ein aus dem Zylinder (196) und dem Kolben (197) ausgewähltes Element mit dem Tänzerarm (195) verbunden ist, wodurch eine Auslenkung des Tänzerarms (195) eine Bewegung des aus dem Kolben (197) und dem Zylinder (196) ausgewählten einen Elements relativ zu dem anderen aus dem Kolben (197) und dem Zylinder (196) ausgewählten Element bewirkt; und bei dem die Positionierungseinrichtung ferner eine Messeinrichtung (201) aufweist, um zwecks Bestimmens des Auslenkbetrags des Tänzerarms (195) die tatsächlich von dem Kolben in dem Zylinder (196) zurückgelegte Strecke zu messen.

15. Applikator nach Anspruch 7, bei dem an dem Kopf (5) nahe der Applikatiönszone mehrere Rollen (143,162) positioniert sind.

16. Applikator nach Anspruch 15, bei dem mindestens eine Rolle (143) nahe der Applikationszone von dem zweiten Antriebsmotor (167) angetrieben wird.

17. Applikator nach Anspruch 16, bei dem mindestens eine der Rollen (162) an einer Retraktionsvorrichtung zum Zurückziehen der Rolle (162) über das flexible Band (144) befestigt ist.

18. Applikator nach Anspruch 17, bei dem die Retraktionsvorrichtung ein Zylinder (160) ist; bei dem der Zylinder (160) einen Kolben (161) aufweist, der an mindestens einer Rolle (162) befestigt ist, um eine Rolle (162) über das flexible Band (144) zurückzuziehen.

19. Applikator nach Anspruch 18, bei dem nahe jeder angetriebenen Rolle (143) sowie im Abstand von dieser eine Klemmrolle (130) positioniert ist, und bei dem das flexible Band (144) zwischen den angetriebenen Rollen (143) und den Klemmrollen (130) positioniert ist.

20. Applikator nach Anspruch 19, bei dem zwischen den angetriebenen Rollen (143) und den Klemmrollen (130) eine Druckrolle (162) positioniert ist, um eine nach unten gerichtete Kraft auf das flexible Band (144) auszuüben.

21. Applikator nach Anspruch 20, bei dem eine Druckrolle (162) vorgesehen ist, um eine nach unten gerichtete Kraft auf die Druckrolle auszuüben.

22. Applikator nach Anspruch 15, bei dem ein Drucker (123) an dem Applikatorkopf (5) gehalten ist, um Stricharkierungen an dem flexiblen Band (144) anzubringen.

23. Applikator nach Anspruch 22, bei dem der Drucker (123) von dem Applikatorkopf (5) hinter den mehreren Rollen gehalten ist, so dass der Drucker (123) das flexible Band (144) bedruckt, nachdem dieses durch die Rollen durchgelaufen ist.

24. Applikator nach Anspruch 23, bei dem der Drucker (123) imstande ist, auf das flexible Band (144) zu drucken, wenn das flexible Band (144) auf der ebenen Bahn (27) positioniert ist.

25. Applikator nach Anspruch 24, ferner mit einer zweiten Steuereinrichtung zum Messen der von dem Applikatorkopf (5) relativ zu dem Tisch (3;253) zurückgelegten Strecke und zum Aktivieren des Druckers (123) nach vorbestimmten Bewegungsstrecken des Applikatorkopfs (5) relativ zu dem Tisch (3;253).

26. Applikator nach Anspruch 25, bei dem an dem Drucker (123) eine Retraktionsvorrichtung (122) angeordnet ist, um den Drucker (123) zu der planaren Bahn (27) hin und von dieser weg zu bewegen.

27. Applikator nach Anspruch 9, bei dem zwischen der Halterung (6) und dem Applikatorkopf (5) eine Welle (82) verläuft; bei dem eine Drehung der Welle (82) eine Drehung des Applikatorkopfs (5) und der Halterung (6) bewirkt; und bei dem ein Motor betriebsmäßig mit der Welle (82) verbunden ist, um die Welle (82) zu drehen.

28. Applikator nach Anspruch 27, bei dem das flexible Band (144) durch die Welle (82) hindurch von der Halterung (6) zu dem Applikatorkopf (5) durchläuft.

29. Applikator nach Anspruch 10, bei dem der Weg für das flexible Band von dem Tänzerarm (195) bis zu der Applikationszone konstant ist.

30. Verfahren zum Aufbringen eines flexiblen Bandes (144) auf eine Bahn (27), mit den folgenden Schritten:
Bewegen eines Applikatorkopfs (5), der einen Bewegungsweg zum Auftragen eines flexibles Bands hat, entlang einer vorbestimmten Strecke, während er gleichzeitig flexibles Band (144) mit vorbestimmten Geschwindigkeiten auf die Bahn (27) aufträgt; und
Bereitstellen einer für ein flexibles Band vorgesehenen Antriebsvorrichtung (140,167) zum Bewegen des flexiblen Bands (144) zu dem Applikatorkopf (5), während das flexible Band (144) auf die Bahn (27) aufgetragen wird;
**gekennzeichnet durch** die folgenden Schritte:
Messen der auf das flexible Band (144) einwirkenden Spannung entlang des Wegs für das flexible Band und Erzeugen eines Spannungssignals;
Ausgeben des Spannungssignals an eine Steuereinheit;
Steuern der Geschwindigkeit der für das flexible Band vorgesehenen Antriebsvorrichtung (140,167) **durch** die Steuereinheit als Reaktion auf das Spannungssignal derart, dass ein proportionales Verhältnis zwischen der Betriebsgeschwindigkeit der für das flexible Band vorgesehenen Antriebsvorrichtung (140,167) und den vorbestimmten Geschwindigkeiten beibehalten wird, wodurch die auf das flexible Band einwirkende Spannung über den Bewegungsweg des Applikatorkopfs (5) im wesentlichen konstant bleibt.

31. Verfahren nach Anspruch 30, mit den weiteren Schritten des Bestimmens der auf das flexible Band (144) einwirkenden Spannung durch Führen des flexiblen Bandes (144) über einen Tänzerarm (195); des Bestimmens der Auslenkung des Tänzerarms (195); und des Veränderns der Geschwindigkeit der für das flexible Band vorgesehenen Antriebsvorrichtung (140, 167) in direkter Relation zu dem Betrag der Auslenkung des Tänzerarms (195).

32. Verfahren nach Anspruch 31, mit den weiteren Schritten des Bereitstellens eines Motors (140) als Antriebsvorrichtung für das flexible Band, um eine Spule zum Ausgeben des flexiblen Bandes (144) zu drehen; des Positionierens des Tänzerarms (195) zwischen dem zum Antreiben der Spule vorgesehenen Motor (140) und einer entlang des Wegs für das flexible Band angeordneten Applikationszone; und des Erhöhens der Geschwindigkeit des die Spule drehenden Motors (140), wenn die gemessene Auslenkung zunimmt, und des Reduzierens der Drehrate des die Spule antreibenden Motors (140), wenn die gemessene Auslenkung abnimmt.

33. Verfahren nach Anspruch 32, mit dem weiteren Schritt des Druckens von Strichmarkierungen auf das flexible Band (144) mittels eines Druckers (103), nachdem das flexible Band (144) auf der Bahn (27) positioniert worden ist.

34. Verfahren nach Anspruch 33, mit den weiteren Schritten des Bestimmens der Strecke, die der Applikatorkopf (5), welcher einen Bewegungsweg relativ zu der Bahn (27) aufweist, zurückgelegt hat; und des Aktivierens des Druckers (123) nach vorbestimmten Abständen entlang des Bewegungswegs des Applikatorkopfs (5) relativ zu der Bahn (27), um Strichmarkierungen zu drucken.

35. Verfahren nach Anspruch 34, mit den weiteren Schritten des Bereitstellens mehrerer Rollen (143;162) an der Applikationszone; und des Zurückziehens mindestens einer der Rollen (162), um der Rolle (162) zu ermöglichen, sich über das flexible Band (144) zu bewegen.

36. Verfahren nach Anspruch 35, mit dem weiteren Schritt des Antreibens mindestens einer der Rollen (143) an der Applikationszone.

37. Verfahren nach Anspruch 31, mit den weiteren Schritten des Anhebens des Applikatorkopfs (5) vor dem Ausbilden einer Ecke in dem flexiblen Band (144); des Formens einer Ecke, während ein Teil des flexiblen Bandes (144) von dem Applikatorkopf (5) über der ebenen Bahn (27) gehalten wird; und des Neuplatzierens der vorgeformten Ecke auf der Bahn (27) durch Absenken des Applikatorkopfs (5).

38. Verfahren nach Anspruch 31, mit den weiteren Schritten des Bereitstellens eines ersten Förderers und eines zweiten Förderers unterhalb des Applikatorkopfs (5); des Platzierens einer ersten Bahn und einer zweiten Bahn auf dem ersten Förderer und dem zweiten Förderer; des Auftragens eines flexiblen Bands (144) auf eine aus der ersten Bahn und der zweiten Bahn ausgewählte Bahn, während die jeweils andere Bahn der ersten und zweiten Bahnen von dem zugehörigen Förderer entfernt wird; des Ersetzens der anderen Bahn der ersten und zweiten Bahnen durch eine dritte Bahn, während das Auflegen flexiblen Bandes (144) auf die aus der ersten Bahn und der zweiten Bahn ausgewählte Bahn zwecks anschließenden Anbringens flexiblen Bandes (144) durch den Applikatorkopf (5) fortgesetzt wird.

## Revendications

1. Dispositif d'application pour appliquer un ruban souple (144) sur une feuille (27) comprenant :
une base (2 ; 252) ;
une tête d'application (5) supportée par la base (2) et ayant un chemin de déplacement, un chemin de ruban souple s'étendant au moins partiellement au travers de la tête d'application (5), et une zone d'application de ruban souple ;
une table (3 ; 253) adaptée pour maintenir la feuille adjacente à la base (2) ;
des premiers moyens d'entraînement (41, 54, 66) pour déplacer la tête d'application (5) par rapport à l'objet le long du chemin de déplacement à des vitesses présélectionnées. ; et,
des seconds moyens d'entraînement (140, 167) portés par la tête d'application (5) pour entraîner le ruban souple (144) le long du chemin de ruban souple ;
**caractérisé par**
des moyens de collecte de données pour la collecte de données relatives à la vitesse des premiers moyens d'entraînement (41, 54, 66) ;
des premiers moyens de contrôle connectés de façon fonctionnelle aux seconds moyens d'entraînement (140, 167) pour recevoir les données des moyens de collecte de données et pour modifier la vitesse des seconds moyens d'entraînement (140) en réponse auxdites données collectées et pour maintenir une relation proportionnelle entre la vitesse de fonctionnement des seconds moyens d'entraînement (140, 167) et la vitesse de fonctionnement des premiers moyens d'entraînement (41, 54, 66), moyennant quoi la tension du ruban souple (144) reste pour l'essentiel constante tout au long du chemin de déplacement de la tête d'application (5).

2. Dispositif d'application selon la revendication 1, dans lequel la base (2 ; 252) inclut une paire d'entretoises parallèles et espacées l'une de l'autre (12, 13) et une poutre coulissante (34) supportée par lesdites entretoises (12, 13) ; et dans lequel la tête d'application est supportée par ladite poutre coulissante (34).

3. Dispositif d'application selon la revendication 2, dans lequel la table (3 ; 253) est positionnée de façon intermédiaire par rapport aux entretoises (12, 13) et au-dessous de la tête d'application (5).

4. Dispositif d'application selon la revendication 3, dans lequel la table (3 ; 253) est pour l'essentiel horizontale.

5. Dispositif d'application selon la revendication 2, dans lequel les premiers moyens d'entraînement (41, 54, 66) comprennent un premier moteur (41) pour déplacer la tête d'application (5) dans une direction parallèle aux entretoises (12, 13), un second moteur (54) pour déplacer la tête d'application (5) dans une direction perpendiculaire aux entretoises (12, 13), et un troisième moteur (66) pour déplacer verticalement la tête d'application (5) par rapport à la table (3 ; 253).

6. Dispositif d'application selon la revendication 5, dans lequel au moins une crémaillère (32) s'étend. parallèlement aux entretoises (12, 13) ; dans lequel le premier moteur (41) comprend un arbre d'entraînement (43) ; dans lequel un engrenage à pignon (48) est attaché à l'arbre d'entraînement (43) et engage de façon fonctionnelle la crémaillère (32) pour déplacer la tête d'application (5) dans une direction parallèle aux entretoises (12, 13) ; dans lequel au moins une crémaillère (52) s'étend perpendiculairement aux entretoises (12, 13) ; dans lequel le second moteur (54) comprend un arbre d'entraînement (56) ; dans lequel un engrenage à pignon (57) est attaché à l'arbre d'entraînement (56) et engage de façon fonctionnelle la crémaillère (52) pour déplacer la tête d'application (5) dans une direction perpendiculaire aux entretoises.

7. Dispositif d'application selon la revendication 1, dans lequel les seconds moyens d'entraînement (140, 167) comprennent un premier moteur adapté pour alimenter en ruban souple (144) la tête d'application (5), et un second moteur d'entraînement adapté pour entraîner le ruban souple (144) le long du chemin de ruban souple.

8. Dispositif d'application selon la revendication 7, comprenant en outre un berceau (6) pour supporter une bobine de ruban souple (144) ; dans lequel le premier moteur d'entraînement (41) est porté par le berceau (6) et dans lequel le second moteur d'entraînement (54) est porté par la tête d'application (5).

9. Dispositif d'application selon la revendication 8, dans lequel le berceau (6) est porté par la tête d'application (5).

10. Dispositif d'application selon la revendication 7, dans lequel les moyens de collecte de données comprennent un bras danseur (195) adapté pour être en contact avec le ruban souple (144) et apte à être dévié en réponse à la tension sur le ruban souple (144) et des moyens de positionnement pour indiquer la déviation du bras danseur (195) ; dans lequel les premiers moyens de contrôle communiquent de façon fonctionnelle avec les moyens de positionnement pour recevoir les données relatives à la déviation du bras danseur (195) ; et dans lequel les moyens de contrôle contrôlent la vitesse de fonctionnement des seconds moyens d'entraînement (140, 167), en fonction de la déviation du bras danseur (195).

11. Dispositif d'application selon la revendication 10, dans lequel les premiers moyens de contrôle sont électroniquement attachés au premier moteur d'entraînement (140) des seconds moyens d'entraînement (140, 167) pour augmenter et diminuer la vitesse du premier moteur d'entraînement (140).

12. Dispositif d'application selon la revendication 11, dans lequel le bras danseur (195) est. porté par la tête d'application (5) le long du chemin de ruban souple.

13. Dispositif d'application selon la revendication 12, dans lequel les moyens de positionnement comprennent un cylindre (196) et un piston (197) ; dans lequel l'un du cylindre (196) et du piston (197) est attaché au bras danseur (195), moyennant quoi ledit piston (197) et ledit cylindre (196) sont déplaçables l'un par rapport à l'autre en fonction de la déviation du bras danseur (195) pour modifier la pression dans le cylindre (196) ; et dans lequel les moyens de positionnement comprennent en outre des moyens de mesure de pression (201) pour mesurer la pression dans le cylindre. (196) pour déterminer la quantité de déviation du bras danseur (195).

14. Dispositif d'application selon la revendication 12, dans lequel les moyens de positionnement comprennent un cylindre (196) et un piston (197) ; dans lequel l'un du cylindre (196) et du piston (197) est attaché au bras danseur (195), moyennant quoi la déviation du bras danseur (195) fait que ledit un du cylindre (196) et'du piston (197) se déplace par rapport à l'autre du cylindre (196) et du piston (197) ; et dans lequel les moyens de positionnement comprennent en outre des moyens de mesure (201) pour mesurer la distance réelle parcourue par le piston dans le cylindre (196) pour déterminer la quantité de déviation du bras danseur (195).

15. Dispositif d'application selon la revendication 7, dans lequel une pluralité de rouleaux (143, 162) sont positionnés sur la tête (5) de façon adjacente à la zone d'application.

16. Dispositif d'application selon la revendication 15, dans lequel au moins un rouleau (143) adjacent à la zone d'application est entraîné par le second moteur d'entraînement (167).

17. Dispositif d'application selon la revendication 16, dans lequel au moins un des rouleaux (162) est fixé à des moyens de rétraction pour rétracter le rouleau (162) sur le ruban souple (144).

18. Dispositif d'application selon la revendication 17, dans lequel les moyens de rétraction sont un cylindre (160) ; dans lequel le cylindre (160) a un piston (161) attaché à au moins un rouleau (162) pour rétracter un rouleau (162) sur le ruban souple (144).

19. Dispositif d'application selon la revendication 18, dans lequel un rouleau pinceur (130) est positionné de façon adjacente à et espacée par rapport à chaque rouleau entraîné (143), et dans lequel le ruban souple (144) est positionné de façon intermédiaire par rapport aux rouleaux entraînés (143) et aux rouleaux pinceurs (130).

20. Dispositif d'application selon la revendication 19, dans lequel un rouleau de pression (162) est positionné de façon intermédiaire par rapport aux rouleaux entraînés (143) et aux rouleaux pinceurs (130) pour appliquer une force descendante sur le ruban souple (144).

21. Dispositif d'application selon la revendication 20, dans lequel des moyens de pression (162) sont prévus pour fournir une force descendante sur le rouleau de pression.

22. Dispositif d'application selon la revendication 15, dans lequel une imprimante (123) est portée par la tête d'application (5) pour appliquer des marques de meneau sur le ruban souple (144).

23. Dispositif d'application selon la revendication 22, dans lequel l'imprimante (123) est portée par la tête d'application (5) derrière la pluralité de rouleaux, l'imprimante (123) imprime ainsi le ruban souple (144) après son passage au travers des rouleaux.

24. Dispositif d'application selon la revendication 23, dans lequel l'imprimante (123) est adaptée pour imprimer sur. le ruban souple (144) lorsque le ruban souple (144) est positionné sur la feuille planaire (27).

25. Dispositif d'application selon la revendication 24, comprenant en outre des seconds moyens de contrôle pour mesurer la distance parcourue par la tête d'application (5) par rapport à la table (3 ; 253), et pour activer l'imprimante (123) à des distances prédéterminées de parcours de la tête d'application (5) par rapport à la table (3 ; 253).

26. Dispositif d'application selon la revendication 25, dans lequel les moyens de rétraction (122) sont attachés à l'imprimante (123) pour déplacer l'imprimante (123) en direction et en retrait de la feuille planaire (27).

27. Dispositif d'application selon la revendication 9, dans lequel un arbre (82) s'étend entre le chariot (6) et la tête d'application (5) ; dans lequel la rotation de l'arbre (82) provoque la rotation de la tête d'application (5) et du chariot (6) ; et dans lequel le moteur est associé de façon fonctionnelle avec l'arbre (82) pour faire tourner ledit arbre (82).

28. Dispositif d'application selon la revendication 27, dans lequel le ruban souple (144) passe du berceau (6) sur la tête d'application (5) au travers de l'arbre (82).

29. Dispositif d'application selon la revendication 10, dans lequel le chemin de ruban souple est constant depuis le bras danseur (195) jusqu'à la zone d'application.

30. Procédé d'application d'un ruban souple (144) sur une feuille (27) comprenant les étapes consistant à :
déplacer une tête d'application (5) ayant un chemin de ruban souple le long d'un chemin prédéterminé tout en appliquant simultanément un ruban souple (144) sur la feuille (27) à des vitesses prédéterminées ; et,
fournir des moyens d'entraînement de ruban souple (140, 167) pour entraîner le ruban souple (144) vers la tête d'application (5) tout en appliquant le ruban souple (144) sur la feuille (27) ;
**caractérisé par** les étapes consistant à
mesurer la tension du ruban souple (144) le long du chemin de ruban souple et créer un signal de tension ;
transmettre le signal de tension à une unité de contrôle ;
contrôler la vitesse des moyens d'entraînement de ruban souple (140, 167) avec l'unité de contrôle en réponse audit signal de tension pour maintenir une relation' proportionnelle entre la vitesse de fonctionnement des moyens d'entraînement de ruban souple (140, 167) et les vitesses prédéterminées, moyennant quoi la tension du ruban souple reste pour l'essentiel constante tout au long du chemin de déplacement de la tête d'application (5).

31. Procédé selon la revendication 30, comprenant l'étape supplémentaire consistant à déterminer la tension du ruban souple (144) en faisant passer le ruban souple (144) sur un bras danseur (195) ; à déterminer la déviation du bras danseur (195) ; et à changer la vitesse des moyens d'entraînement de ruban souple (140, 167) en relation directe avec la quantité de la déviation du bras danseur (195).

32. Procédé selon la revendication 31, comprenant les étapes supplémentaires consistant à fournir un moteur (140) comme moyens d'entraînement de ruban souple pour faire tourner une bobine pour délivrer le ruban souple (144) ; à positionner le bras danseur (195) de façon intermédiaire par rapport au moteur (140) pour entraîner la bobine, et une zone d'application le long du chemin de ruban souple ; et à augmenter la vitesse du moteur (140) faisant tourner la bobine à mesure que la déviation mesurée augmente, et à faire diminuer le régime de rotation du moteur (140) faisant tourner la bobine à mesure que la déviation mesurée diminue.

33. Procédé selon la revendication 32, comprenant l'étape supplémentaire consistant à imprimer des marques de meneau sur le ruban souple (144) après que le ruban souple (144) a été positionné sur la feuille (27) avec une imprimante (103).

34. Procédé selon la revendication 33, comprenant l'étape supplémentaire consistant à déterminer la distance parcourue par la tête d'application (5) ayant un chemin de déplacement par rapport à la feuille (27) ; et à activer l'imprimante (123) à des distances présélectionnées le long du chemin de déplacement de la tête d'application (5) par rapport à la feuille (27) pour imprimer des marques de meneau.

35. Procédé selon la revendication 34, comprenant. les étapes supplémentaires consistant à fournir une pluralité de rouleaux (143 ; 162) adjacents à la zone d'application ; à rétracter au moins un desdits rouleaux (162) pour permettre au rouleau (162) de passer sur le ruban souple (144).

36. Procédé selon la revendication 35, comprenant l'étape supplémentaire consistant à entraîner au moins un des rouleaux (143) adjacents à la zone d'application.

37. Procédé selon la revendication 31, comprenant l'étape supplémentaire consistant à relever la tête d'application (5) avant de former un coin dans le ruban souple (144) ; à former un coin pendant qu'une partie du ruban souple (144) est supportée au-dessus de la feuille planaire (27) par la tête d'application (5) ; et à replacer le coin préformé sur la feuille (27) en abaissant la tête d'application (5).

38. Procédé selon la revendication 31, comprenant l'étape supplémentaire consistant à fournir un premier convoyeur et un deuxième convoyeur sous' la tête d'application (5) ; à fournir une première feuille et une deuxième feuille sur le premier convoyeur et le deuxième convoyeur ; à appliquer un ruban souple (144) sur l'une de la première feuille et de la deuxième feuille tout en retirant l'autre de la première feuille et de la deuxième feuille du convoyeur associé ; à remplacer ladite autre de la première et de la deuxième feuille par une troisième feuille tout en continuant à appliquer le ruban souple (144) sur ladite une de la première feuille et de la deuxième feuille pour l'application ultérieure du ruban souple (144) par la tête d'application (5).
